Europäisches Patentamt

European Patent Office

Office européen des brevets

(19)

(11) **EP 1 053 456 B1**

(12) **FASCICULE DE BREVET EUROPEEN**

(45) Date de publication et mention
de la délivrance du brevet:
**24.11.2004 Bulletin 2004/48**

(51) Int Cl.⁷: **G01L 3/14**, G01L 5/22,
B62D 5/04

(21) Numéro de dépôt: **99901699.1**

(86) Numéro de dépôt international:
**PCT/FR1999/000226**

(22) Date de dépôt: **03.02.1999**

(87) Numéro de publication internationale:
**WO 1999/040402 (12.08.1999 Gazette 1999/32)**

(54) **CAPTEUR DE COUPLE ET COLONNE DE DIRECTION POURVUE D'UN TEL CAPTEUR**

DREHMOMENTSENSOR UND MIT EINEM SOLCHEN SENSOR VERSEHENE LENKSÄULE

TORQUE SENSOR AND STEERING COLUMN EQUIPPED WITH SAME

(84) Etats contractants désignés:
**DE FR GB IT**

(30) Priorité: **04.02.1998 FR 9801295**

(43) Date de publication de la demande:
**22.11.2000 Bulletin 2000/47**

(73) Titulaire: **SNR ROULEMENTS
74010 Annecy Cédex (FR)**

(72) Inventeur: **NICOT, Christophe
F-74330 Epagny (FR)**

(74) Mandataire: **Keib, Gérard
Bouju Derambure Bugnion,
52, rue de Monceau
75008 Paris (FR)**

(56) Documents cités:
**EP-A- 0 442 091        WO-A-97/08527
FR-A- 2 478 004**

## Description

L'invention se rapporte au domaine technique des capteurs de couple pouvant être par exemple utilisés dans les systèmes de direction assistée de véhicules.

Ces servodirections ou directions assistées peuvent être de différents types conventionnels suivant : pneumatiques, hydrauliques, hydrostatiques, électriques, électrohydrauliques, suivant le type d'énergie employée.

Les servodirections comportent conventionnellement un capteur de couple ou couplemètre, monté en relation avec le dispositif de direction du véhicule.

Ce couplemètre émet un signal indicatif du couple de braquage exercé par le.conducteur, conventionnellement au moyen du volant de direction, sur le dispositif de direction du véhicule.

Le signal de sortie du capteur est conventionnellement adressé à un calculateur d'assistance de direction qui déclenche l'assistance, en commandant par exemple un moteur électrique, dans le cas d'une servodirection électrique.

La plupart des couplemètres comprennent une barre de torsion reliant deux demi-arbres. Des guidages sont prévus pour éviter les effets des efforts parasites de flexion.

L'on sait que le couple exercé en torsion pure sur une barre cylindrique pleine de section circulaire, réalisée en un matériau de module d'Young E et de coefficient de Poisson $\mu$ vaut, en élasticité linéaire isotrope :

$$\tilde{a} = \frac{E}{2(1+\mu)} \frac{\pi d^4}{32} \cdot \frac{\tilde{O}}{L}$$

où d est le diamètre de la barre, L la longueur de la barre et $\tilde{O}$ l'angle de torsion.

Par conséquent, le fait de former une zone de section réduite dans une colonne de direction permet une concentration de déformation en torsion dans cette zone, servant à la mesure du couple.

Des exemples de couplemètres à barre de torsion pour servodirections peuvent être trouvés dans les documents suivants :

- WO-97 08 527, EP-453 344, EP-325 517, FR-2 738 339 issus de la demanderesse,

ainsi que dans les autres documents suivants :

- demandes de brevet au Japon publiées sous les N° JP-50 77 743, JP-57 19 81 71, JP-59 07 58 64, JP-57 08 77 62, JP-59 11 85 77, JP-61 14 674, JP-62 13 43 71, JP-62 09 44 70, JP-63 29 037, JP-63 09 36 73, JP-30 79 473 ;

- brevets européens publiés sous les N° EP-369 311, EP-396 895, EP-418 763, EP-515 052, EP-555 987, EP-562 426, EP-566 168, EP-566 619, EP-652 424, EP-638 791, EP-673 828, EP-681 955, EP-728 653, EP-738 647, EP-765 795, EP-738 648, EP-770 539, EP-802 107 ;

- demandes internationales de brevet PCT publiées sous les N° WO-87/02 319, WO-92/20 560, WO-95/19 557, WO-96/06 330 ;

- demandes de brevet en France, au Royaume-Uni et aux Etats-Unis publiées sous les N° suivants : GB-2 306 641, FR-2 705 455, US-4 874 053, US-4 907 668, US-4 984 474, US-5 123 279, US-5 394 760, US-5 515 736, US-5 578 767, US-5 585 573, US-5 616 849, US-5 641 916.

Les principales méthodes de mesure de couple d'un arbre tournant. comportant ou non une barre de torsion , sont les suivantes :

- méthodes basées sur un phénomène électromagnétique ;
- méthodes optiques ;
- méthodes électriques.

Les méthodes magnétiques mettent essentiellement en oeuvre la magnétostriction et l'effet Hall.

Par magnétostriction, on désigne la déformation mécanique réversible qui accompagne la variation d'aimantation d'un solide ferromagnétique.

Ce phénomène est réversible : une déformation exercée sur un matériau ferromagnétique placé dans un champ magnétique provoque une variation de l'aimantation (magnétostriction inverse).

Par effet Hall, l'on désigne conventionnellement la production d'un champ électrique normal au vecteur densité de courant dans un conducteur ou semi-conducteur placé dans un champ d'induction magnétique normal au vecteur densité de courant.

Des exemples de couplemètres mettant en oeuvre la magnétostriction peuvent être trouvés dans les documents suivants : EP-651 239, EP-502 722, EP-288 049, US-4 774 464, US-5 450 761, US-4 933 580, US-4 939 435, US-3 548 649, US-3 587 305.

Des capteurs mettant en oeuvre l'effet Hall peuvent être trouvés notamment dans les documents suivants : FR-2 737 010, FR-2 689 633.

Les méthodes optiques de mesure de couple sont essentiellement associées à des phénomènes d'interférences ou de mesure de densité optique. L'on peut se référer, par exemple, aux documents suivants : EP-555 987, US-5 490 450, US-4 676 925, US-4 433 585, US-5 001 937, US-4 525 068, US-4 939 368, US-4 432 239, FR-2 735 232, FR-2 735 233, WO-95/19 557.

Les méthodes électriques de mesure de couple sont essentiellement liées à la mesure capacitive ou à une mesure de différence de phase entre deux codeurs magnétiques montés circonférentiels à l'axe de torsion.

Le document FR-2 724 018 est relatif à un capteur de couple comportant un dispositif à jauges de mesure d'allongement. Ce dispositif à jauges est disposé sur un corps de mesure, soumis à des tensions mécaniques sous l'action d'un couple.

On connaît, notamment du document EP 0 442 091, un capteur de couple comprenant :

- une couronne extérieure sur laquelle est appliqué le couple à mesurer sur une colonne, deux enveloppes étant assemblées à la couronne extérieure ;
- un moyeu solidaire en rotation de la colonne, la couronne étant assemblée au moyeu par des rayons déformables ;
- une enveloppe non contrainte assemblée au moyeu par des supports non contraints ;

dans lequel des bobines fixées sur un boîtier agencé autour des enveloppes mesurent les petits déplacements relatifs des enveloppes assemblées à la couronne par rapport à l'enveloppe non contrainte lorsqu'un couple est appliqué.

Par ailleurs, le document FR 2 478 004 décrit un servo-volant électrique pour véhicule automobile. Un extensomètre à résistances est supporté par une plaquette dont une extrémité est solidaire d'un flasque de la colonne de direction, l'autre extrémité étant soumise à l'action d'un flasque solidaire du volant. Un circuit électrique détecte le couple appliqué au volant par la déformation de l'extensomètre et assure l'alimentation d'un moto-réducteur.

L'invention se rapporte à un capteur de couple, ou couplemètre, pouvant être par exemple utilisé dans les dispositifs de direction assistée de véhicules, et étant insensible aux perturbations électromagnétiques, aux efforts parasites, ce capteur étant de plus rigide, de forte inertie, monobloc, de faible coût et de dimensions réduites.

A cette fin, l'invention se rapporte, selon un premier aspect, à un capteur de couple formé d'un ensemble présentant une certaine rigidité comme défini dans la revendication 1.

Dans un mode de réalisation, le moyen déformable élastiquement associant le premier anneau extérieur déplaçable et l'anneau intérieur est une poutre s'étendant radialement de l'anneau intérieur vers l'anneau extérieur déplaçable.

Le moyen sensiblement non contraint associant le second anneau extérieur sensiblement non contraint et l'anneau intérieur est une poutre s'étendant radialement de l'anneau intérieur vers la second anneau extérieur sensiblement non contraint.

Dans un autre mode de réalisation, le moyen déformable élastiquement associant l'anneau extérieur déplaçable à l'anneau intérieur est un tube déformable en torsion.

Dans un mode de réalisation particulier, le moyen déformable élastiquement associant le premier anneau extérieur déplaçable et l'anneau intérieur est en forme de serpentin comportant au moins un coude.

Les moyens de mesure du petit déplacement relatif du premier anneau extérieur déplaçable par rapport au second anneau extérieur, sensiblement non contraint sont choisis parmi le groupe comprenant : les détecteurs optiques, les détecteurs électromagnétiques, les détecteurs capacitifs et équivalents.

L'invention se rapporte, selon un deuxième aspect, à un dispositif de direction de véhicule comportant au moins un capteur de couple ou couptemètre tel que présenté ci-dessus.

Dans un mode de réalisation, le capteur forme moyeu rapporté au volant de direction.

Dans un autre mode de réalisation, le capteur forme moyeu au volant de direction et est venu de matière avec celui-ci.

Ce dispositif comporte des moyens d'assistance au braquage, le déclenchement desdits moyens étant fonction de la valeur du signal issu du capteur et traité par le circuit électronique.

Selon une caractéristique, le dispositif de direction comporte un connecteur tournant permettant de relier électriquement le circuit électronique à un calculateur, ledit circuit électronique étant fixé sur la face avant du capteur et formant partie intégrante de celui-ci.

D'autres objets et avantages de l'invention apparaîtront plus complètement au cours de la description suivante de modes de réalisation, description qui va être faite en se référant aux dessins annexés dans lesquels :

- la figure 1 est une vue schématique en perspective éclatée d'un dispositif de direction de véhicule comprenant un capteur de couple rapporté, selon un mode de réalisation de l'invention ;

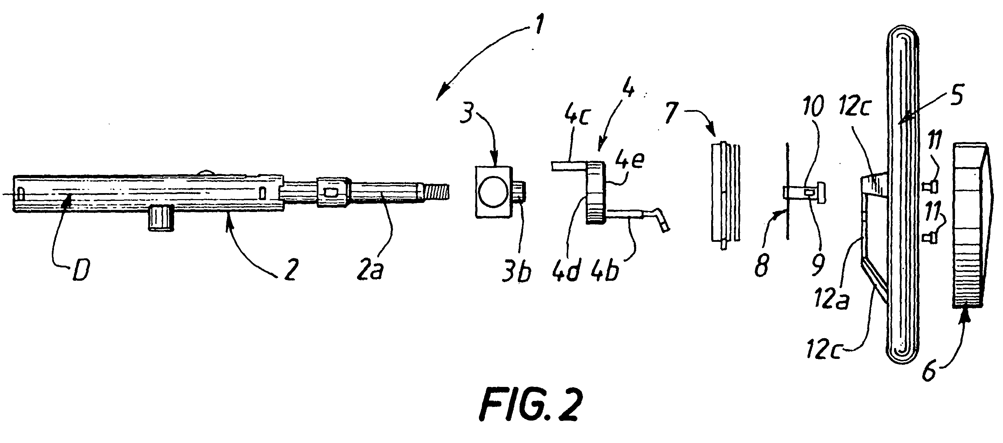

- la figure 2 est une vue latérale schématique, éclatée, correspondant à la figure 1 ;
- la figure 3 est une vue en perspective d'un moyeu à corps d'épreuve en flexion selon un mode de réalisation ;
- la figure 4 est une vue de face correspondant à la figure 3 ;
- la figure 5 est une vue correspondant à la figure 1, le moyeu à corps d'épreuve en flexion étant monté d'une pièce et non rapporté sur l'arceau du volant ;
- la figure 6 est une vue latérale schématique, éclatée, correspondant à la figure 5 ;
- la figure 7a est une vue de face de l'ensemble volant, moyeu à corps d'épreuve en flexion tel que représenté en figure 1 ;
- la figure 7b est une vue de face de l'ensemble volant, moyeu à corps d'épreuve en flexion tel que représenté en figure 5 ;
- la figure 8a est une vue en coupe transversale correspondant à la ligne VIII-VIII de la figure 7a ;
- la figure 8b est une vue en coupe transversale correspondant à la ligne VIII-VIII de la figure 7b ;
- la figure 9 est une vue de détail de la figure 5 ;
- la figure 10 est une vue de face d'un moyeu volant à corps d'épreuve en flexion selon un autre mode de réalisation que ceux représentés dans les figures 1 à 9, et pouvant prendre lieu et place de ceux-ci ;
- la figure 11 est une vue de face d'un moyeu volant à corps d'épreuve en flexion pourvu de poutres butées, selon un mode de réalisation ;

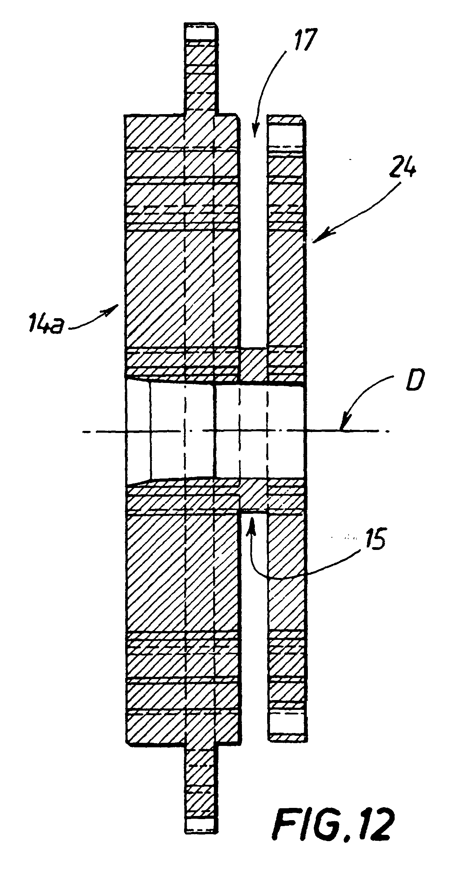

- la figure 12 est une vue en coupe selon la ligne XII-XII de la figure 11 ;
- la figure 13 est une vue de face d'un moyeu volant à corps d'épreuve en flexion selon un autre mode de réalisation que ceux représentés dans les figures 1 à 12, et pouvant prendre lieu et place de ceux-ci ;
- la figure 14 est une vue en coupe selon la ligne XIV-XIV de la figure 13 ;
- la figure 15 est une vue en coupe selon la ligne XV-XV de la figure 13 ;
- la figure 16 est une vue en perspective d'un moyeu à corps d'épreuve en torsion selon un mode de réalisation, ce moyeu pouvant prendre lieu et place des moyeux à corps d'épreuve en flexion représentés en figures 1 à15;
- la figure 17 est une vue de face correspondant à la figure 16 ;
- la figure 18 est une vue en coupe selon la ligne XVIII-XVIII de la figure 17 ;
- la figure 19 est une vue en perspective schématique, éclatée, d'un dispositif de direction comportant le moyeu à corps d'épreuve en torsion représenté en figures 16 à 18 ;
- la figure 20 est une vue en perspective du dispositif de direction représenté en figure 19, en position d'assemblage, les capteurs étant sortis de leur logement ;

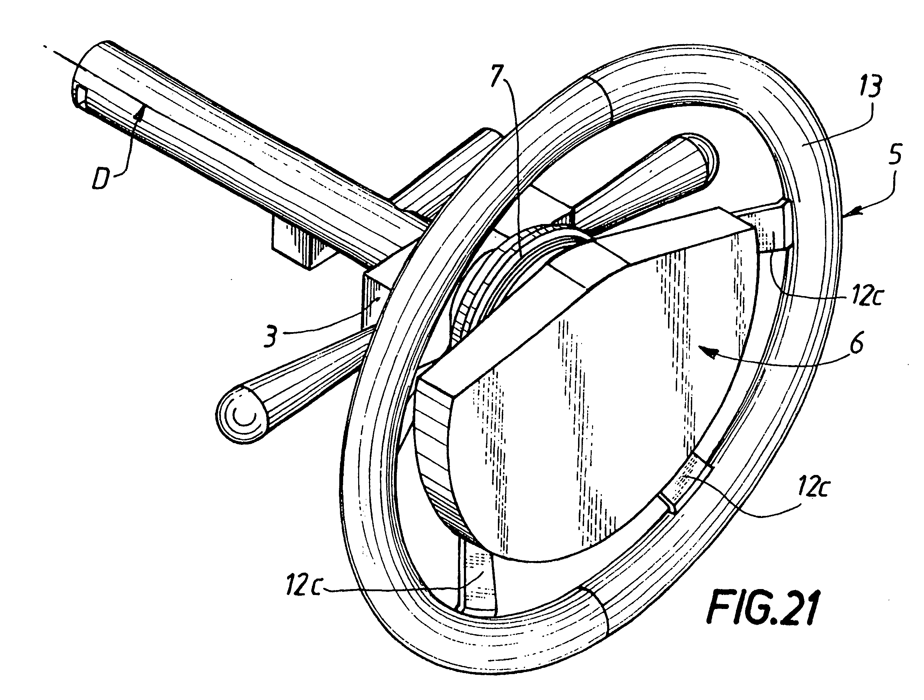

- la figure 21 est une vue en perspective d'un dispositif de direction, correspondant aux figures 1, 5 et 19, un boîtier de coussin gonflable de sécurité étant disposé dans la partie centrale du volant ;

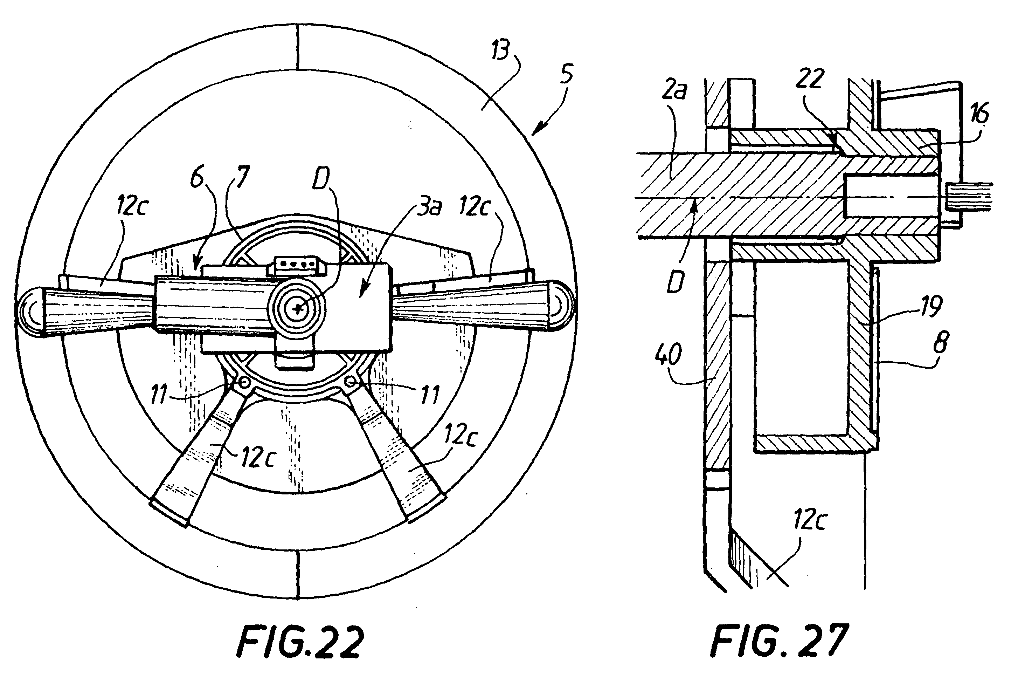

- la figure 22 est une vue arrière, selon la flèche A, du dispositif de direction représenté en figure 1, après assemblage ;

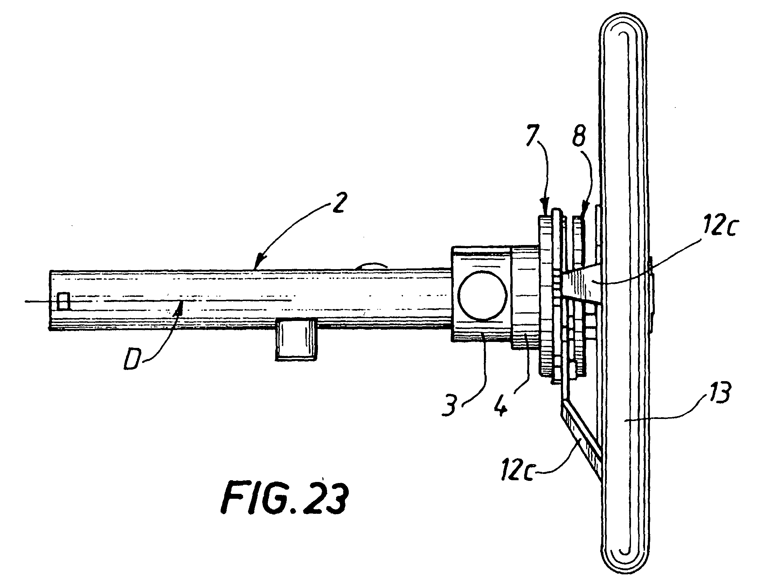

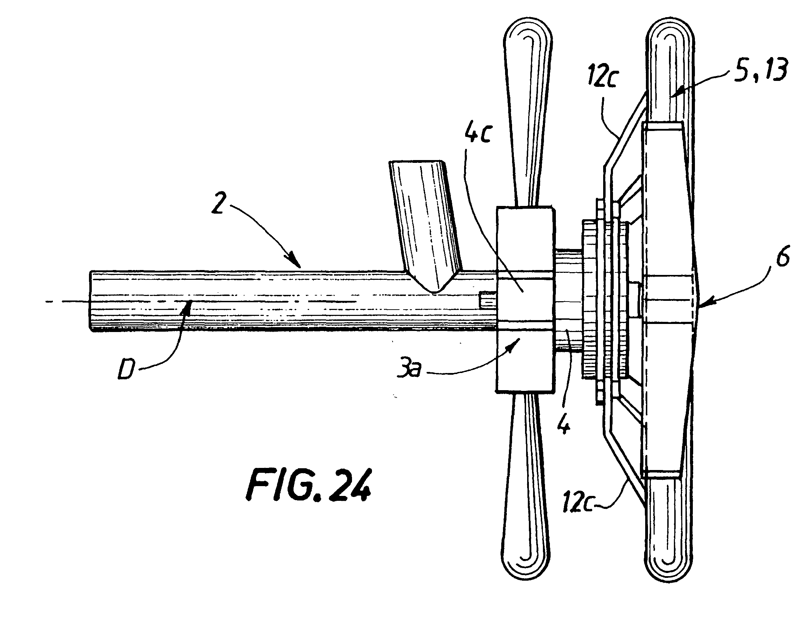

- les figures 23 et 24 sont des vues latérales, prises à 90° l'une de l'autre, du dispositif représenté en figure 22, la figure 23 étant une vue latérale gauche et la figure 24 une vue de dessus.

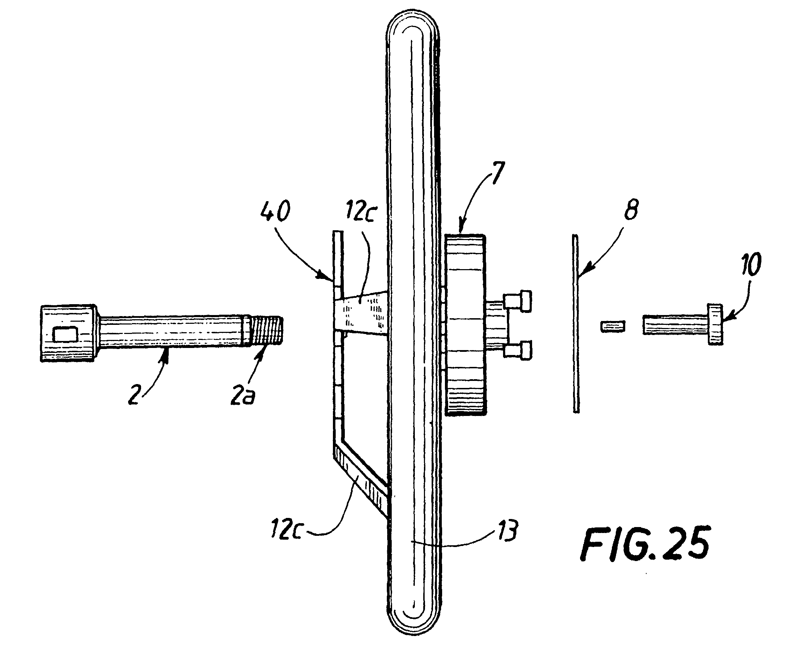

- la figure 25 est une vue latérale éclatée montrant le principe d'assemblage d'un dispositif de direction comprenant un moyeu à corps d'épreuve en torsion ;

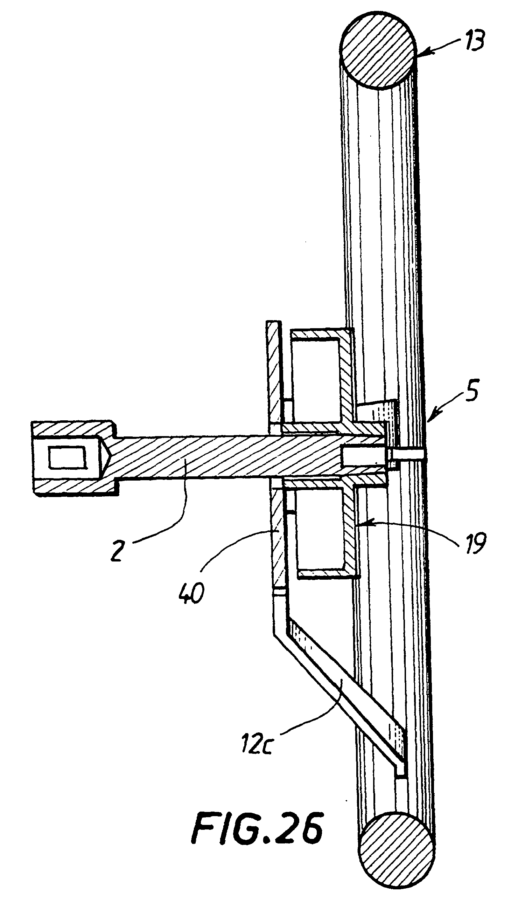

- les figures 26 et 27 sont des vues en coupe transversale du dispositif de direction représenté en figures 16 à 20, la figure 27 étant une vue de détail de la figure 26 ;
- la figure 28 est une vue de face d'un moyeu selon un autre mode de réalisation, pouvant prendre lieu et place des moyeux représentés en figures 1 à 16 ;
- les figures 29 et 30 sont des vues de face de moyeux à corps d'épreuve en flexion selon d'autres modes de réalisation ;
- la figure 31 est une vue schématique en perspective d'un capteur à effet Hall destiné à être intégré dans un moyeu tel que représenté en figure 1 à 30, selon un mode de réalisation.

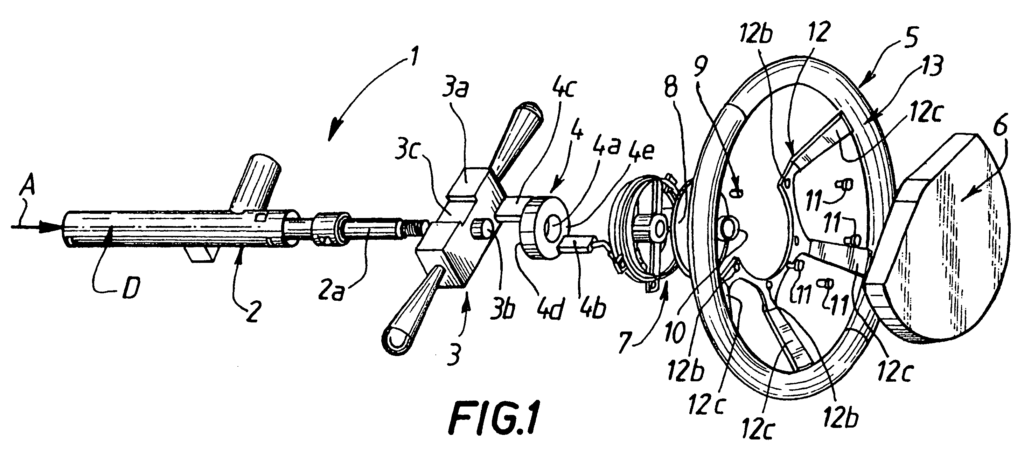

L'on se rapporte tout d'abord à la figure 1.

Le dispositif de direction 1, représenté schématiquement en perspective éclatée sur la figure 1 est destiné à être intégré dans un véhicule, par exemple une automobile.

Ce dispositif 1 comprend une colonne de direction 2. Cette colonne 2 peut être télescopique, le cas échéant, et/ou d'inclinaison variable par rapport à la carrosserie et au conducteur.

Au dispositif de direction 1 est associé un ensemble de commande sous volant 3.

L'ensemble de commande sous volant 3 comprend un bloc central 3a comportant un trou traversant 3b de diamètre tel que l'ensemble 3 peut être ajusté sur la partie extrême 2a de l'arbre de transmission de la colonne 2.

Dans le mode de réalisation représenté, la partie extrême 2a est de section transversale sensiblement circulaire, le trou traversant 3b étant également circulaire en section transversale i.e. perpendiculaire à l'axe principal D du dispositif de direction 1.

Le dispositif de direction 1 comprend un connecteur tournant 4 pourvu de deux broches 4b, 4c et d'un trou central traversant 4a.

Dans le mode de réalisation représenté, les broches 4b et 4c sont sensiblement disposées parallèlement à l'axe principal D et sont de forme parallélépipédique.

La broche 4c est en saillie depuis la face transversale arrière 4d du connecteur 4, la broche 4b étant en saillie depuis la face transversale avant 4e de ce connecteur 4.

La broche 4c est destinée à être maintenue en position dans une rainure 3c ménagée sur le bloc central 3a de l'ensemble de commande sous volant 3.

Le dispositif de direction 1 comprend un couplemètre dont le corps d'épreuve est intégré dans le moyeu 7 du volant 5.

Le cas échéant, ainsi qu'il est représenté en figure 1, le volant 5 comporte en sa partie centrale, un boîtier de coussin gonflable de sécurité 6.

Dans ce cas, le connecteur tournant 4 peut servir tant à la connectique du boîtier de coussin gonflable 6 qu'à la connexion entre le circuit électronique 8 du couplemètre de servodirection et le moyen d'assistance (moteur électrique, dispositif de commande du circuit hydraulique...).

Dans d'autres modes de réalisations, le dispositif de direction 1 est dépourvu de boîtier de coussin gonflable.

Le volant 5 comporte une jante 13 et une armature 12.

Dans le mode de réalisation représenté, l'armature 12 se présente sous la forme d'un arceau transversal 12a relié à la jante 13 par quatre bras inclinés 12c.

L'arceau transversal 12a est percé de trous traversants 12b permettant le passage des vis 11 de fixation du moyeu 7 sur le volant 5, dans le mode de réalisation représenté en figure 1.

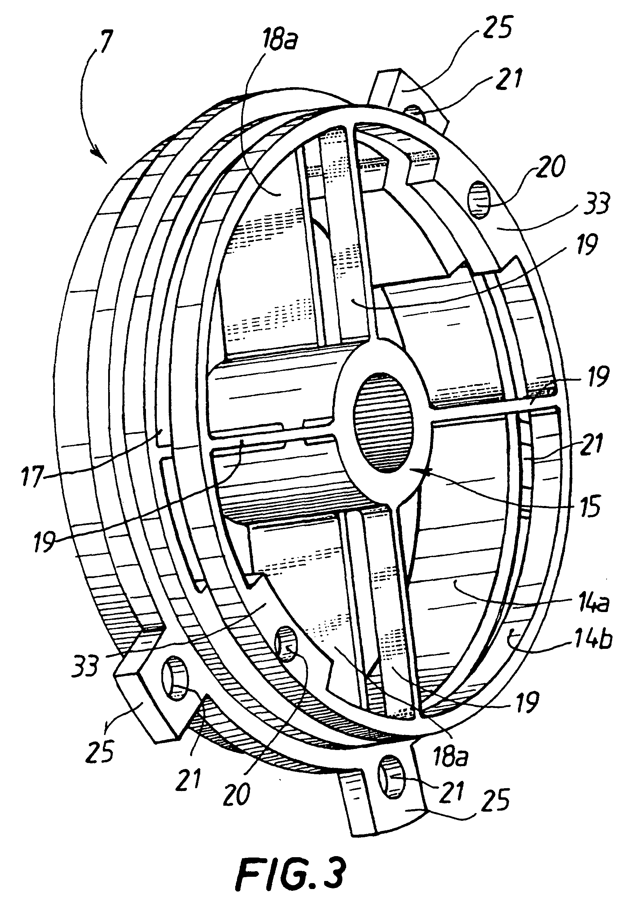

Le moyeu 7 va maintenant être décrit en référence aux figures 3 et suivantes.

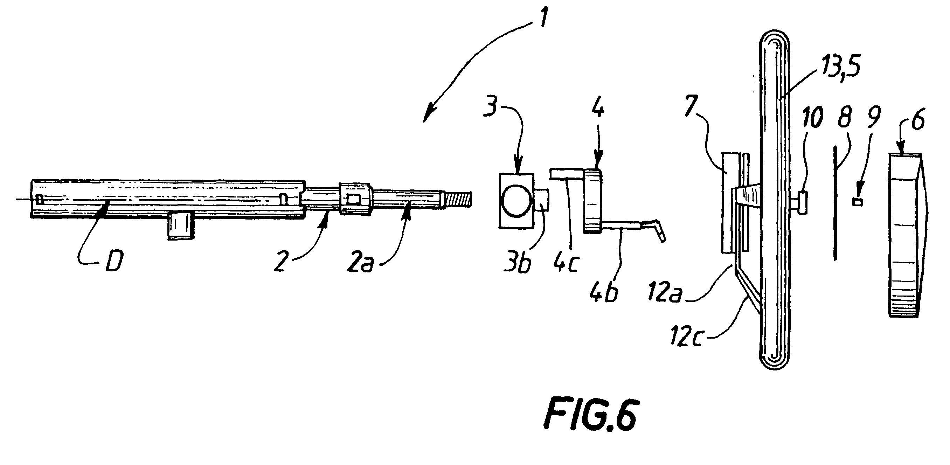

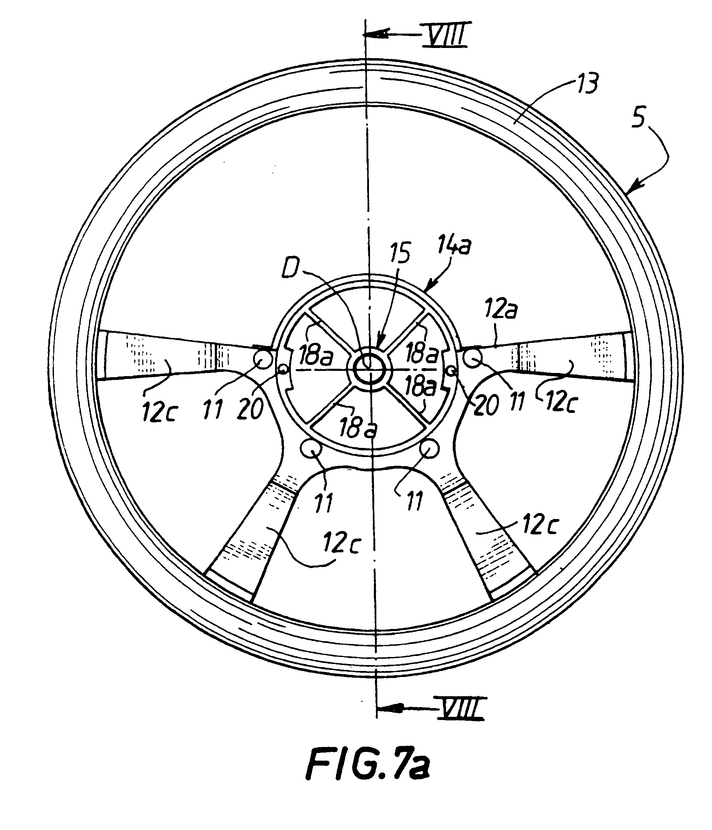

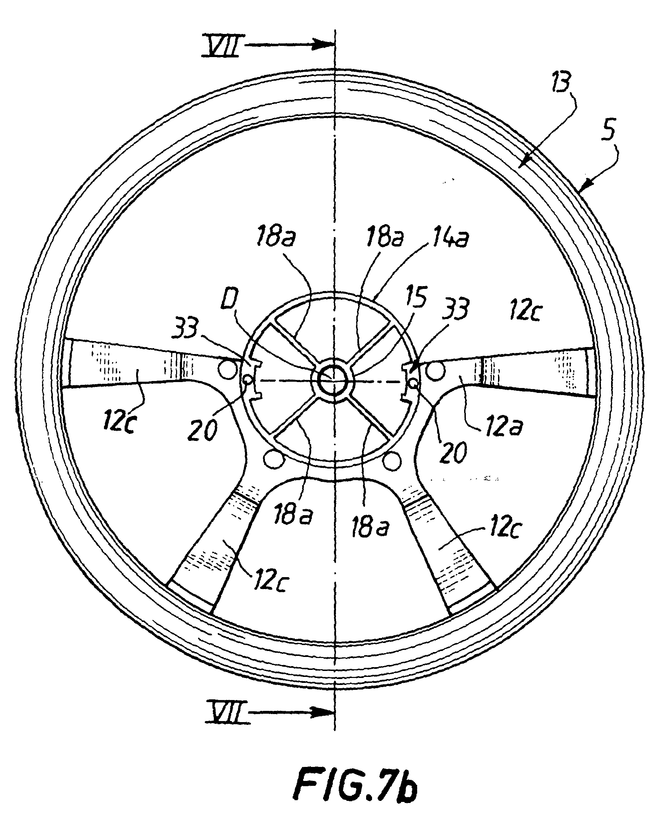

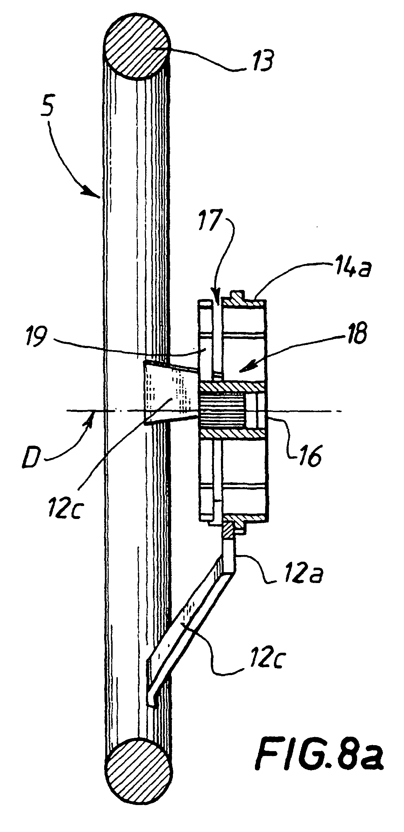

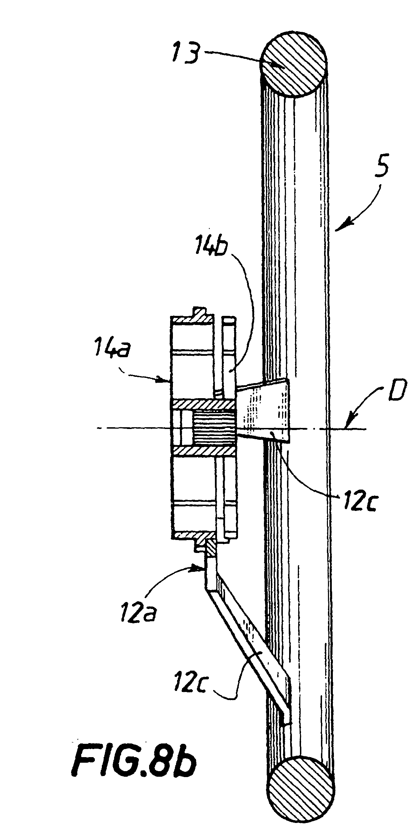

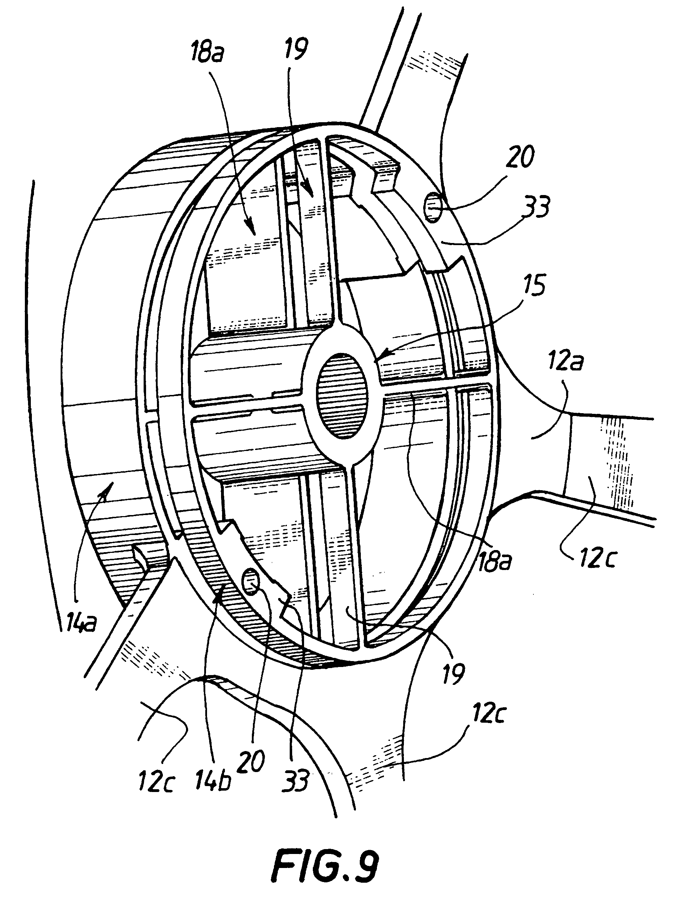

Un premier mode de réalisation du moyeu 7 va être plus particulièrement décrit en référence aux figures 3 à 9.

Dans ce premier mode, le moyeu 7 comporte un corps d'épreuve en flexion.

Le moyeu 7 comporte un anneau intérieur 15 cylindrique et deux anneaux extérieurs 14a, 14b reliés à l'anneau intérieur 15 par des poutres élastiques déformables en flexion 18a et des poutres non déformées 19.

Plus précisément, l'anneau extérieur arrière 14a, fixé au moyeu 7 du volant 5 par des vis 11 passant dans les trous 21, est relié à l'anneau intérieur 15 par l'intermédiaire de poutres élastiques déformables en flexion 18a.

Les anneaux extérieurs 14a, 14b sont sensiblement coaxiaux et de même diamètre moyen.

Dans le mode de réalisation représenté, les poutres déformables 18a sont au nombre de quatre, régulièrement réparties perpendiculairement à l'axe principal D.

Dans d'autres modes de réalisation, non représentés, ces poutres déformables sont au nombre de deux, trois ou plus de quatre.

L'anneau extérieur avant 14b est relié à l'anneau intérieur 15 par le biais de poutres radiales non déformées 19.

Dans le mode de réalisation représenté, ces poutres non déformées 19 sont au même nombre que les poutres déformables élastiquement en flexion 18a, les poutres 18a, 19 étant situées sensiblement selon deux plans radiaux perpendiculaires à l'axe principal D.

Dans d'autres modes de réalisation, non représentés, les poutres 19 sont au nombre de deux, trois ou plus de quatre, le nombre de poutres 18a étant de quatre.

Dans certains modes de réalisation, non représentés, le nombre de poutres 18a est différent de quatre et différent du nombre de poutres 19.

Dans d'autres modes de réalisation, non représentés, les poutres déformables élastiquement (18A) ne sont pas équidistantes les unes des autres.

Dans certains modes de réalisation, non représentés, les poutres (19) sont sensiblement libres de contrainte, et ne sont pas équidistantes les unes des autres.

Dans d'autres modes de réalisation, non représentés, le nombre de poutres 18a est égal au nombre de poutres 19, ce nombre étant différent de quatre.

Les poutres 18a, 19 peuvent être, ainsi qu'il est représenté, sensiblement disposées à l'aplomb les unes des autres, selon des plans radiaux communs.

Dans d'autres modes de réalisation, non représentés, les poutres 19 sont disposées selon des plans radiaux décalés par rapport aux plans radiaux des poutres 18a.

Dans d'autres modes encore de réalisation, l'anneau extérieur 14b est relié à l'anneau intérieur 15 par un voile annulaire.

L'anneau extérieur déplaçable 14a du moyeu 7 est associé rigidement à l'arceau 12a du volant 5, les vis 11 passant au travers des trous 12b de l'arceau pour atteindre les trous 21 prévus dans les pattes d'attache 25 de l'anneau extérieur 14a.

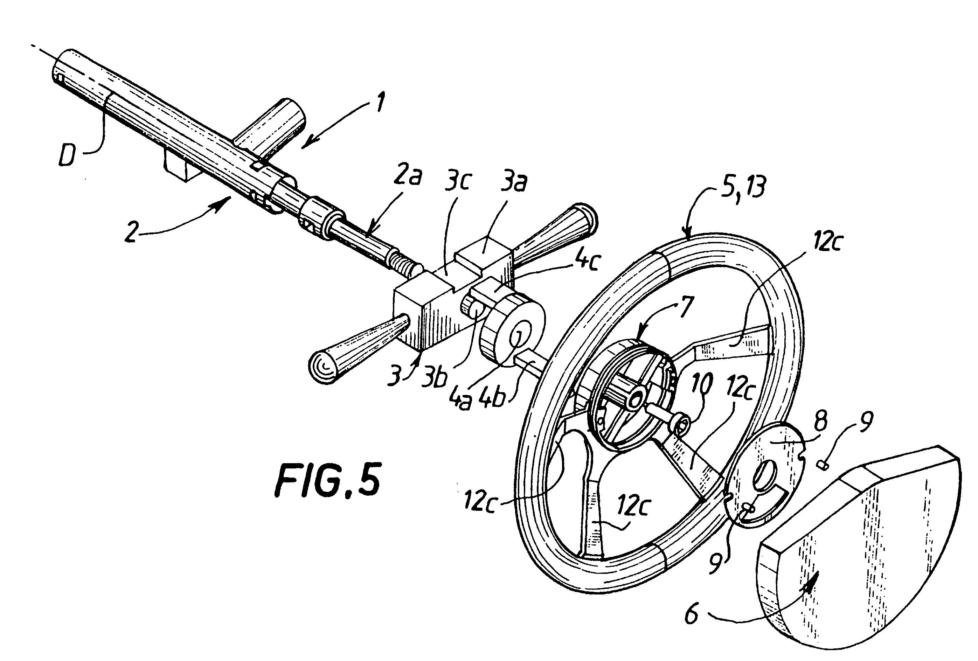

En variante, tel que représenté en figure 5, le moyeu à corps d'épreuve 7 peut être d'une pièce avec l'arceau 12a du volant 5, par exemple venu de matière avec lui, ou soudé à celui-ci par tout moyen adapté.

Dans le même temps, une vis 10 fixe le volant 5 sur la colonne 2 ; l'ensemble de commande sous volant 3, le connecteur tournant 4, le moyeu 7 se trouvant pris en sandwich entre l'arceau 12a du volant 5 et la colonne de direction 2, sur une longueur correspondant à la partie extrême 2a de l'arbre de transmission de cette colonne 2.

Le circuit électronique 8 est rapporté sur ta face avant du moyeu, par exemple collé sur les poutres 19 ou le voile reliant ranneau extérieur 14b à l'anneau intérieur 15.

Lorsque le conducteur exerce un effort sur la jante 13 du volant 5, l'anneau extérieur arrière 14a solidaire du volant 5 entraîne une déformation en flexion des poutres 18a, déformation d'autant plus forte que le couple résistant sur la colonne 2 est important.

L'anneau extérieur avant 14b, quant à lui, reste Sensiblement non contraint. Sa poshion peut ainsi servir de base de référence pour la mesure du déplacement de l'anneau extérieur arrière 14a.

L'anneau extérieur avant 14b porte des capteurs 9 aptes à mesurer des petits déplacements, de l'ordre de quelques microns à quelques centaines de microns au minimum.

Dans le mode de réalisation représenté, ces capteurs 9 sont au nombre de deux et sont disposés dans des logements 20, axiaux, ménagés dans l'anneau avant 14b, au droit de l'anneau arrière 14a.

Ces capteurs 9 peuvent être de tout type approprié : capteurs optiques, capacitifs, électromagnétiques etc.

Dans un mode de réalisation, ces capteurs sont des sondes à effet Hall.

Dans un autre mode de réalisation, ces capteurs sont des sondes à maonétorésistance (MR) ou à magnétorésistance géante (GMR).

Bien qu'une seule sonde à effet Hall 9 suffise à la mesure des petits déplacements, on peut, pour des raisons de fiabilité, disposer dans l'entrefer de mesure 17 plusieurs sondes afin de créer une redondance.

Chacune des sondes à effet Hall peut posséder son propre circuit électronique associé.

Par comparaison ou combinaison des signaux délivrés par deux, trois ou quatre sondes différentes, on peut détecter une défaillance éventuelle de l'une des sondes et assurer une excellente fiabilité au couplemètre.

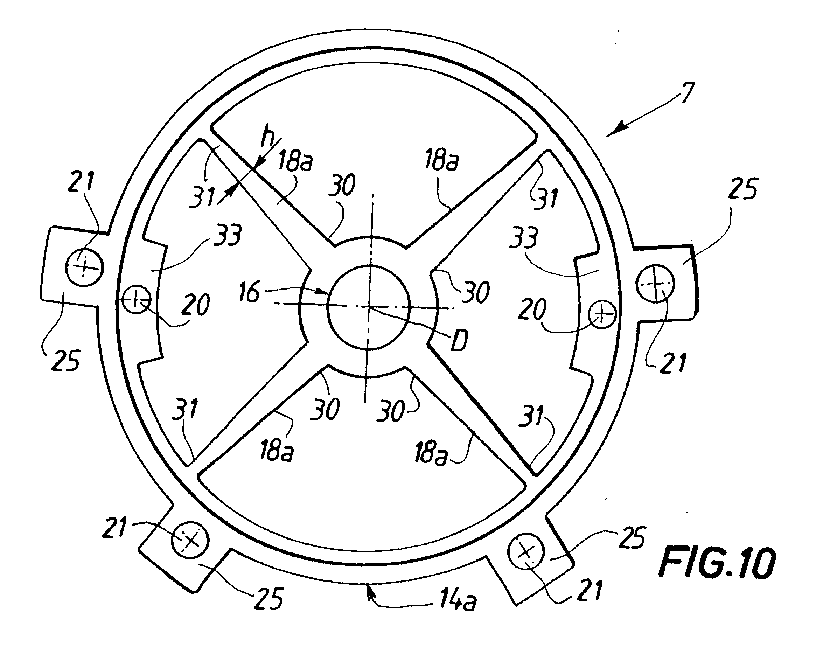

Un deuxième mode de réalisation du moyeu 7 va maintenant être décrit en référence à la figure 10.

Le moyeu 7 représenté en figure 10 comporte, tout comme le moyeu qui vient d'être décrit, un anneau extérieur déplaçable 14a, un anneau extérieur non contraint 14b, un anneau intérieur 15, des poutres déformables 18a reliant l'anneau 14a à l'anneau intérieur 15 et des poutres non déformées 19 reliant l'anneau 14b à l'anneau intérieur 15.

Dans le mode de réalisation représenté en figure 10, le moyeu comporte quatre poutres 18a dont la section varie du pied 30 vers la tête 31 des poutres.

Dans d'autres modes de réalisation, le corps d'épreuve comporte une, deux, trois ou plus de quatre poutres de section variable de leur pied vers leur tête.

Cette variation peut être régulière ou non.

Cette variation peut être liée à une variation de la largeur de la poutre et/ou à une variation de l'épaisseur de la poutre.

L'épaisseur h de la poutre est mesurée tangentiellement à un cercle centré sur l'axe principal D du dispositif.

Dans le mode de réalisation représenté en figure 10, cette épaisseur h varie de manière sensiblement linéaire.

Dans d'autres modes de réalisation, non représentés, cette épaisseur h varie de manière polynomiale, logarithmique, de façon continue ou non lorsque l'on s'éloigne de l'axe D du dispositif et que l'on se dirige vers l'anneau extérieur 14a.

La largeur b des poutres 18a, mesurée suivant la direction D, est sensiblement constante dans le mode de réalisation considéré en figure 10.

Dans d'autres modes de réalisation, non représentés, la largeur b varie de manière linéaire ou polynomiale, la hauteur h étant également variable.

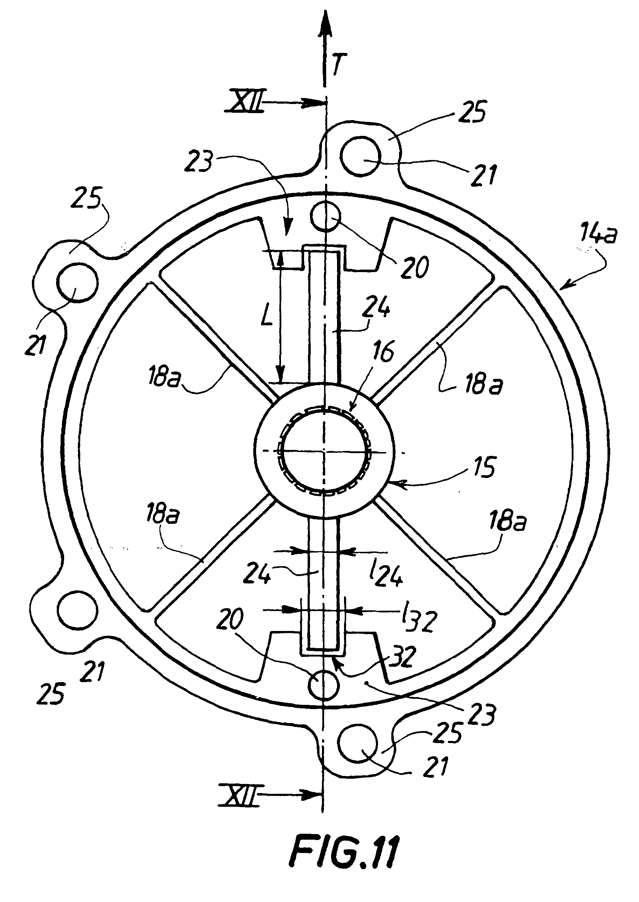

L'on se rapporte maintenant à la figure 11 qui est une vue de face d'un moyeu 7 à corps d'épreuve en flexion, pourvu de poutres butées 24.

Dans le mode de réalisation représenté, deux poutres butées 24 s'étendent radialement selon une direction transversale T depuis l'anneau intérieur 15 vers l'anneau extérieur déplaçable 14a.

La longueur L des poutres butées 24 est inférieure à celle des poutres déformables 18a, la partie extrême de chaque poutre butée 24 étant engagée, avec un jeu prédéterminé, dans une butée de déformation 23.

Les butées de déformation 23 sont en saillie interne de l'anneau extérieur 14a et comportent une gorge 32 de largeur $I_{32}$ supérieur à la largeur $I_{24}$ des poutres 24. Le jeu existant entre les butées et les poutres 24, lié à la différence de largeur $I_{32}$-$I_{24}$, peut être déterminé en fonction de la déformation maximum admissible pour les poutres 18a.

Et ceci, par exemple, afin d'éviter leur déformation plastique.

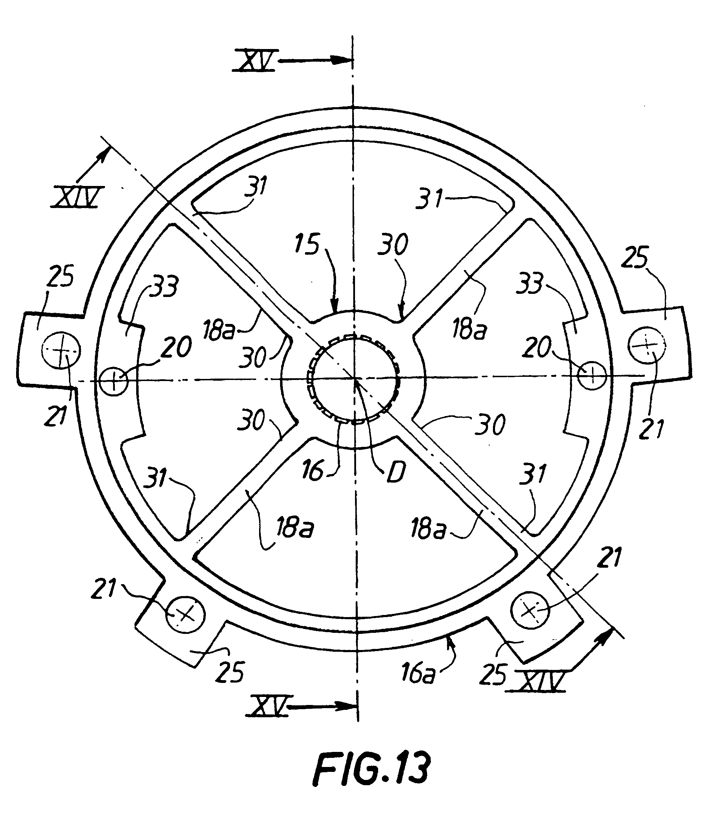

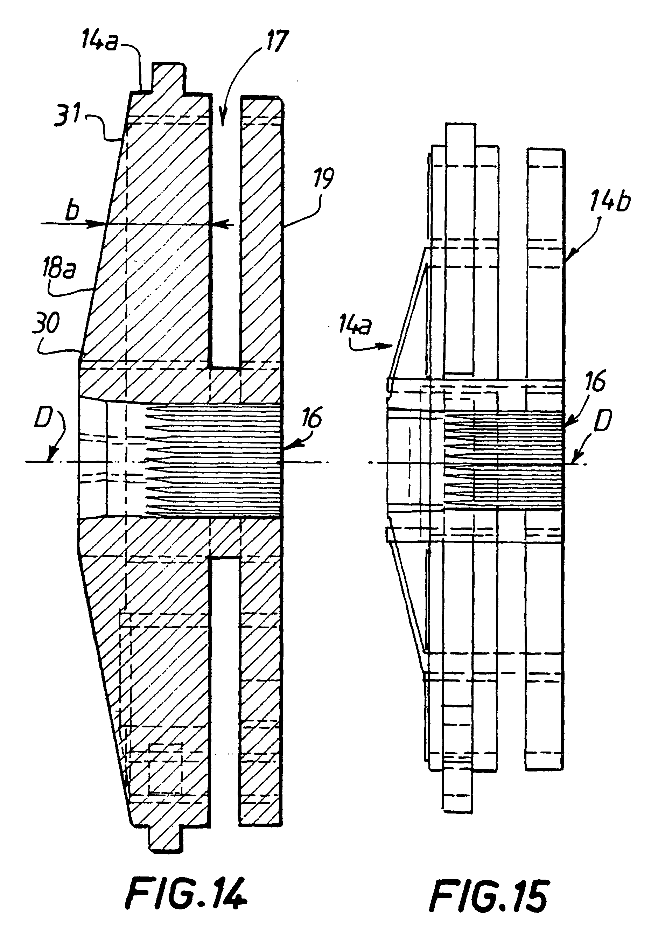

Les figures 13 à 15 illustrent un autre mode de réalisation du moyeu 7 à corps d'épreuve en flexion.

Dans ce mode de réalisation, la largeur b des poutres déformables 18a varie des pieds 30 à la tête 31 de ces poutres, de manière décroissante.

Cette décroissance peut être linéaire ou polynomiate.

Le nombre de poutres déformables 18a, leur répartition angulaire, l'épaisseur et la hauteur des poutres, le matériau employé pour les réaliser conditionnent, ainsi qu'il apparaîtra clairement à l'homme du métier, les caractéristiques suivantes :

- module d'inertie ;
- contrainte maximale dans les poutres, pour un couple maximum donné, par exemple à rupture ;
- valeur du couple minimum mesurable, pour une technique de mesure de petit déplacement donné (par exemple sonde de Hall).

Le corps d'épreuve peut être réalisé en un matériau choisi parmi le groupe comprenant : les aciers, les fontes, les alliages d'aluminium, les alliages de magnésium.

Un acier 35NCD16, une fonte à graphite sphéroïdal, un aluminium de la série 7000 peuvent par exemple être envisagés.

Le corps d'épreuve peut être moulé ou usiné en fonction du matériau employé, de la géométrie des poutres, du coût admissible notamment, ainsi que l'homme du métier pourra le déterminer.

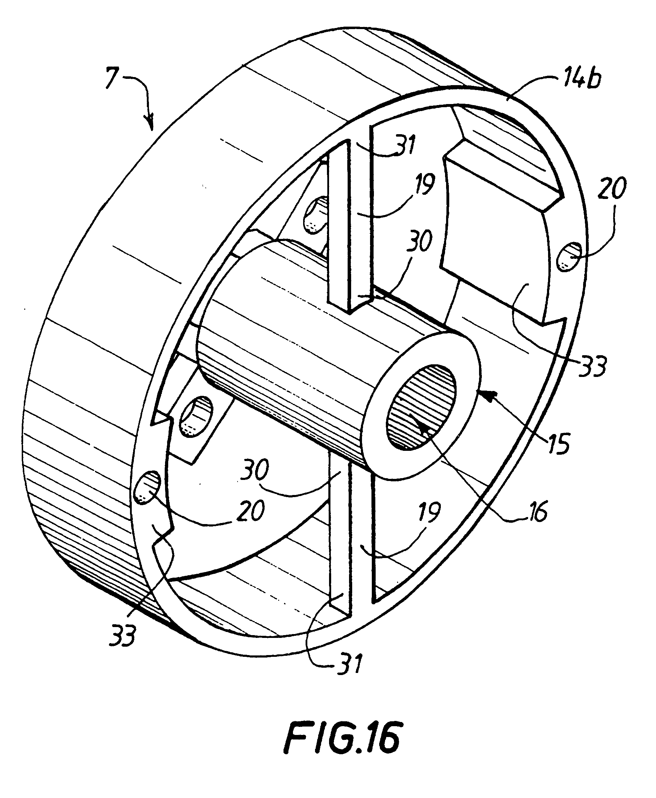

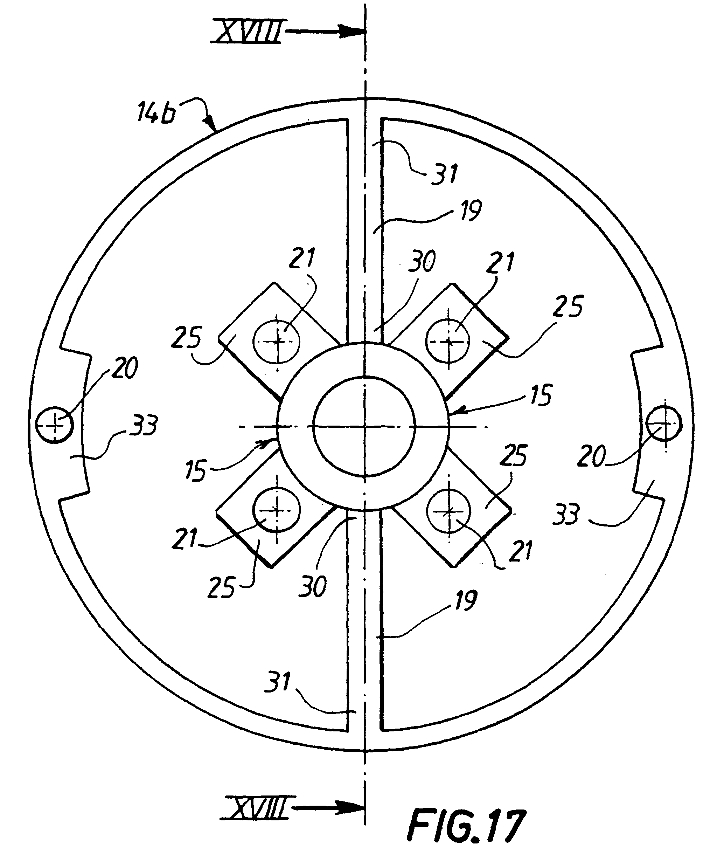

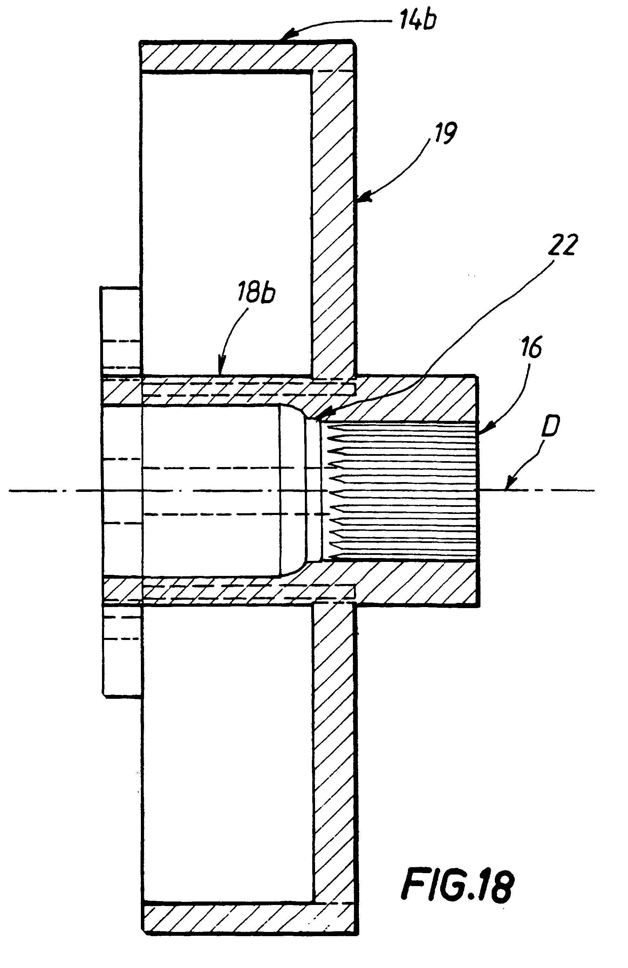

L'on se réfère maintenant aux figures 16 à 20 qui illustrent un mode de réalisation d'un moyeu à corps d'épreuve en torsion.

Le moyeu 7 comporte un anneau extérieur non contraint 14b, de surface périphérique externe sensiblement cylindrique.

Cet anneau 14b est pourvu de deux logements 20, ménagés dans deux surépaisseurs 33 diamétralement opposées.

Entre ces surépaisseurs 33, la surface interne de l'anneau 14b est sensiblement cylindrique.

L'anneau 14b est assemblé à l'anneau intérieur 15 par au moins une poutre 19, un voile ou tout autre élément de liaison sensiblement rigide.

Dans le mode de réalisation représenté, deux poutres radiales 19, venues de matière avec l'anneau interne 15 et l'anneau extérieur non contraint 14b associent ces deux anneaux 15, 14a.

Ces poutres 19 sont, dans le mode de réalisation représenté, de section carrée sensiblement constante de leur pied 30 à leur tête 31 et sont sensiblement alignées.

L'anneau interne 15 comporte un trou traversant définissant un embout cannelé 16 de fixation et, à l'opposé, une surface d'appui 22 de l'arbre de transmission cannelé de la colonne 2 de direction, lorsque le corps d'épreuve est destiné à être incorporé dans une colonne de direction.

Un tube déformable en torsion 18b relie l'anneau interne 15 à l'anneau extérieur déplaçable 14a.

Dans un mode de réalisation, le tube déformable en torsion est ajouré, des lumières s'étendant longitudinalement séparant des poutres déformables en flexion torsion.

Cet anneau extérieur déplaçable 14a est assemblé rigidement au moyen d'application du couple sur la colonne 2, à savoir le volant 5, dans le cas d'une intégration du capteur dans une direction du véhicule.

Des vis 11 assurent, via les trous 21, la fixation du moyeu 7 sur la plaque centrale transversale 40 de l'armature 12 du volant.

Cette plaque 40 est pourvue de trous 12b correspondant aux trous 21 du moyeu 7.

L'armature 12 du volant comporte, tout comme dans les modes de réalisation présentés en figure 1, 5 et 7a, 7b plusieurs bras inclinés 12c reliant la plaque centrale transversale 40 à la jante 13 du volant 5.

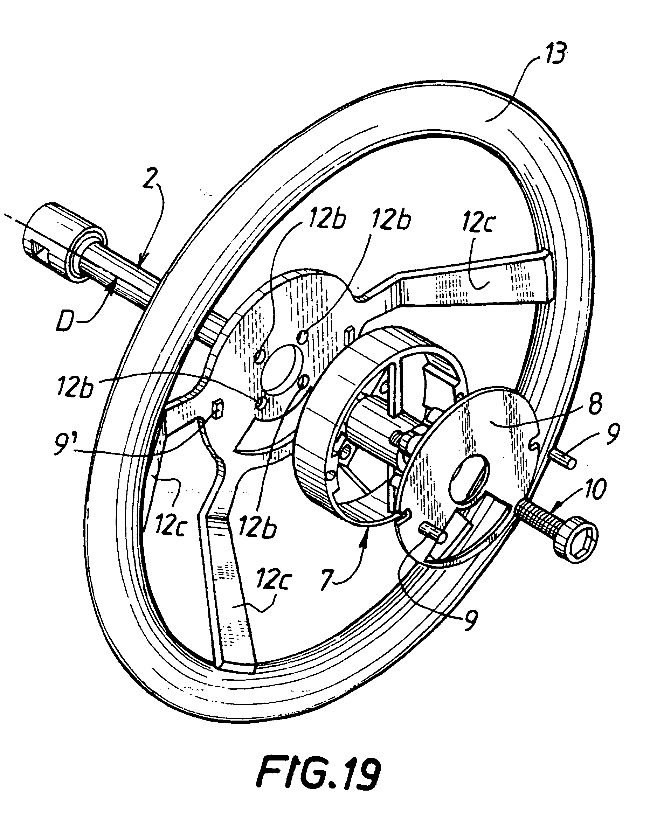

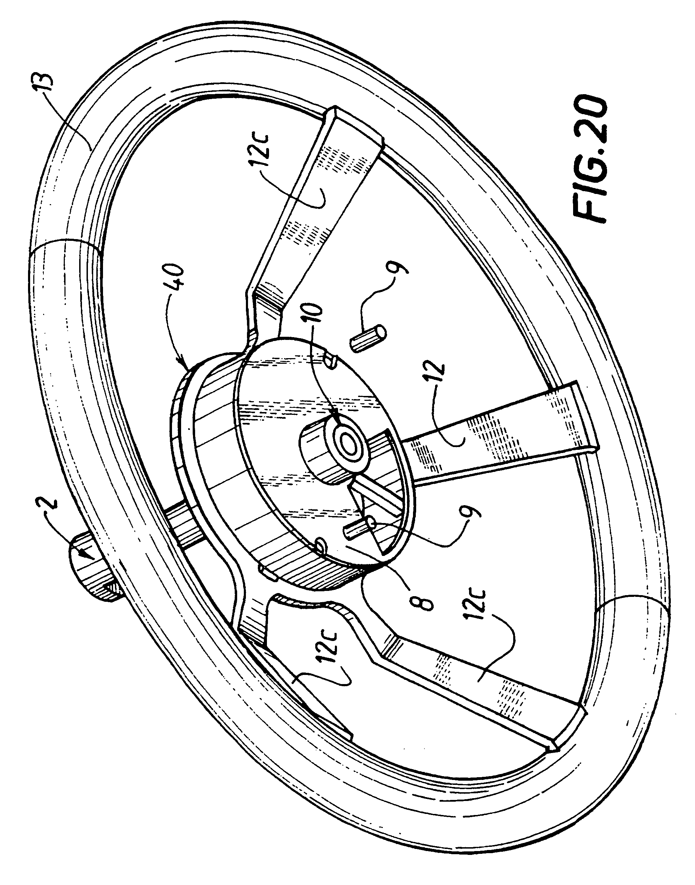

Lorsque le moyeu 7 est monté sur un volant 5, de la manière représentée en figure 19 et 20, l'anneau extérieur déplaçable 14a, solidaire de la plaque 40 et donc de la jante 13 du volant 5 est déplacé en rotation par rapport à l'anneau extérieur non contraint 14b.

La mesure de ce petit déplacement, par exemple par le biais de sondes de Hall 9 placées dans les logements 20 et d'aimants 9' fixés en regard sur la plaque 40, permet la mesure du couple appliqué par le conducteur et permet la commande de l'assistance, après traitement du signal par le circuit électronique 8.

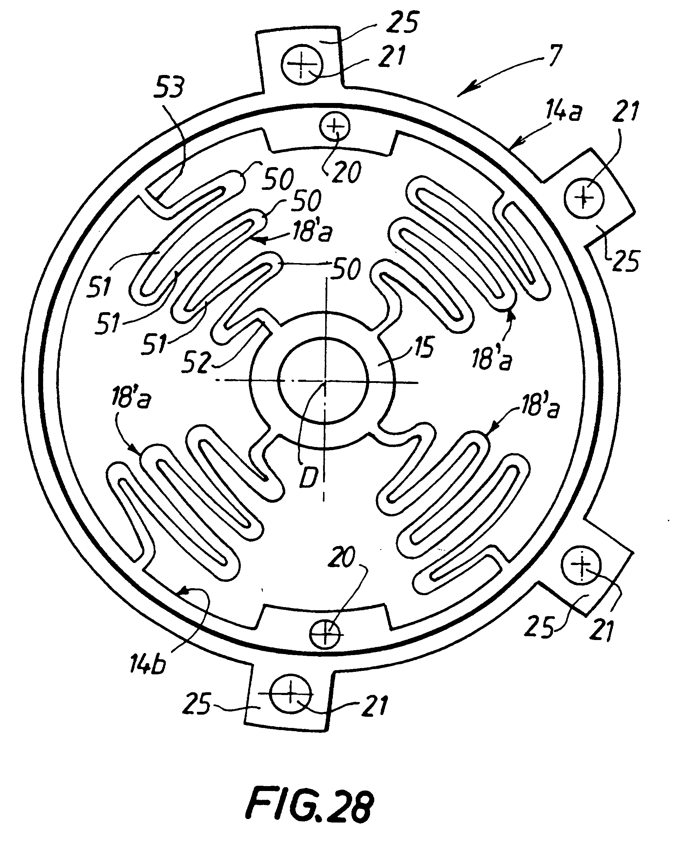

L'on se rapporte maintenant à la figure 28 qui représente un autre mode de réalisation du moyeu 7 pouvant prendre lieu et place des moyeux décrits précédemment.

Dans ce mode de réalisation, les moyens déformables étastiquement 18'a reliant l'anneau interne 15 à l'anneau extérieur déplaçable 14a se présentent sous forme de serpentins.

Ces serpentins forment plusieurs coudes 50 séparés par des secteurs sensiblement en arc de cercles 51 concentriques.

Ces serpentins s'étendent sensiblement dans un même plan perpendiculaire à l'axe D de l'arbre de transmission.

L'épaisseur de chaque serpentin est, dans le mode de réalisation considéré sensiblement constante depuis la base 52 jusqu'à la tête 53 de ces serpentins.

Dans d'autres modes de réalisation, non représentés, les serpentins sont au nombre de deux, trois ou plus de quatre.

L'épaisseur d'au moins un serpentin peut être variable, de sa tête jusqu'à son pied, le cas échéant.

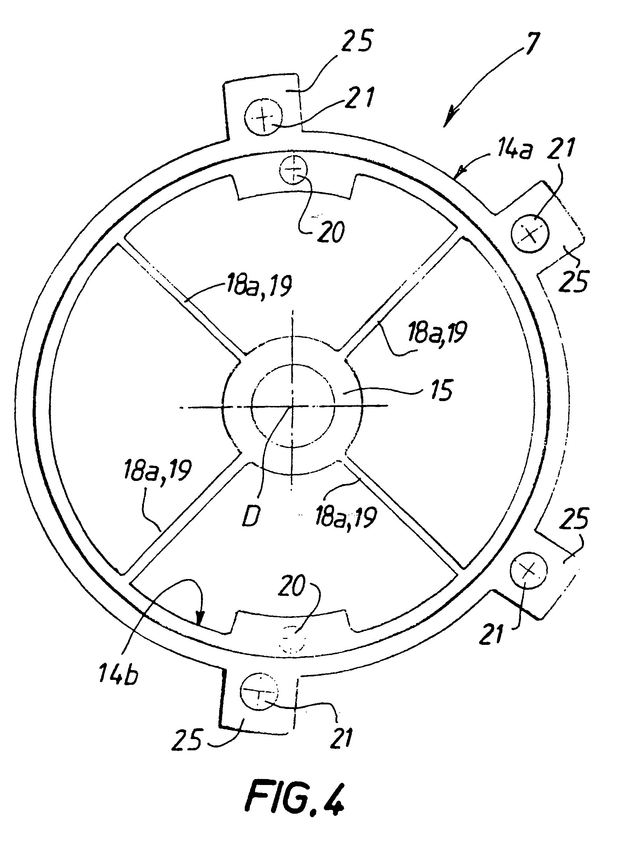

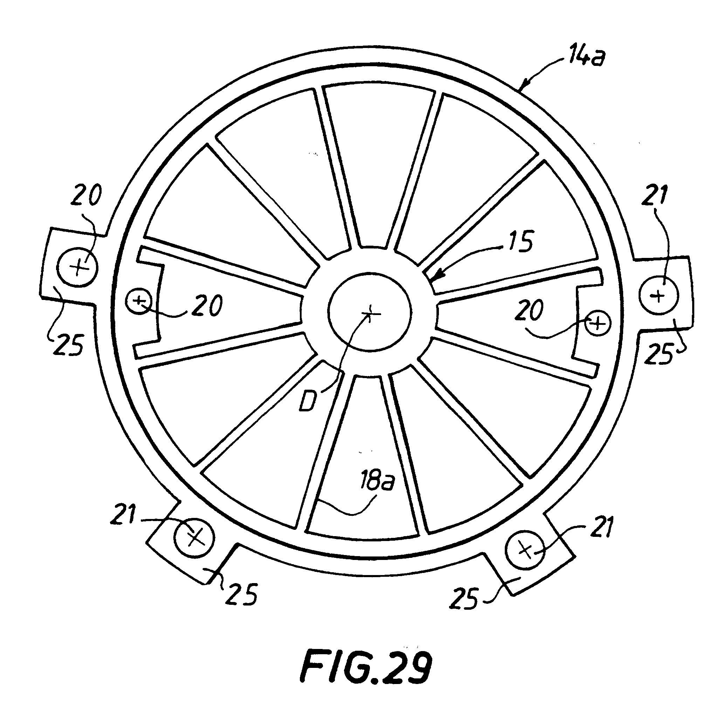

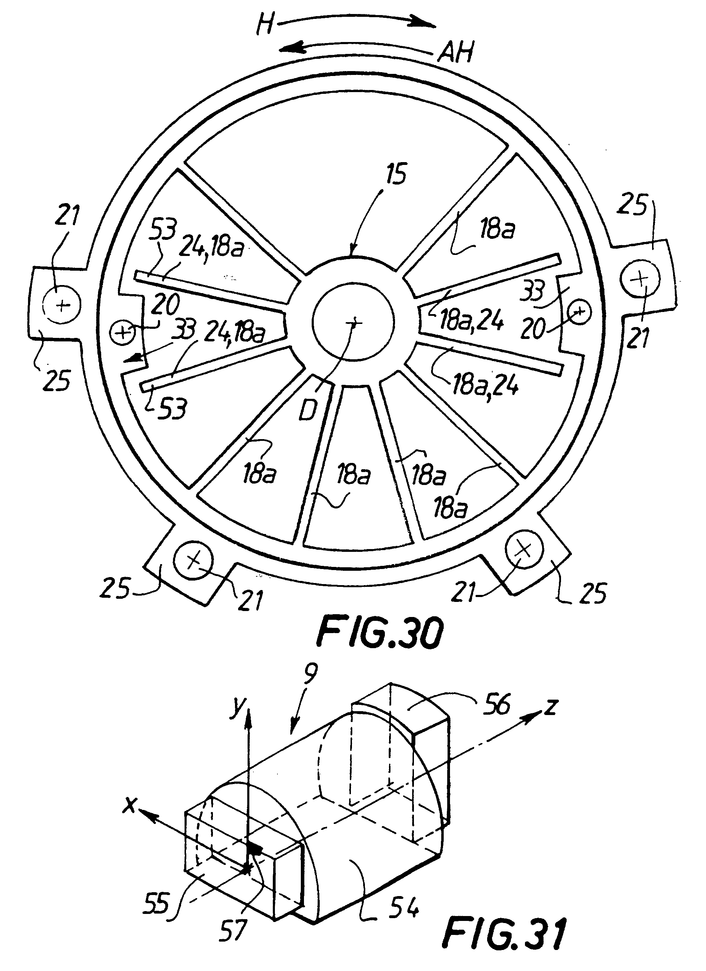

Les figures 29 et 30 sont des vues de face d'un moyeu à corps d'épreuve en flexion, comprenant plus de quatre poutres déformables 18a du type représenté en figure 4, en l'occurrence douze poutres réparties radialement régulièrement autour de l'axe D.

Partant du corps d'épreuve représenté en figure 29, il est possible, par usinage ou tout autre moyen équivalent, d'obtenir le corps d'épreuve représenté en figure 30, ne comportant plus que dix poutres déformables 18a dont quatre servent de butées, lors d'une application d'un couple dépassant une valeur seuil.

La butée est obtenue, quel que soit le sens de rotation demandé à l'arbre de transmission, dès qu'une valeur seuil de couple est atteinte, par contact entre la partie extrême 53 des poutres butées 24 et la surépaisseur 33 en saillie interne de l'anneau extérieur non déformé 14b.

Selon la disposition angulaire radiale des poutres butées 24, le couple maximum admis dans le sens horaire H pourra être supérieur, égal ou inférieur au couple maximum admis dans le sens antihoraire AH.

Les poutres déformables en flexion décrites ci-dessus comportent, dans certains modes de réalisation, des découpes.

Lors de l'application d'un couple, seules les poutres 18a non découpées en deux tronçons transmettent les efforts, les tronçons des poutres découpées ne transmettant un effort de flexion que lorsqu'un couple appliqué seuil est dépassé.

Les deux tronçons d'une poutre découpée sont, dans un mode de réalisation, distants l'un de l'autre d'une longueur prédéterminée en fonction de ladite valeur seuil pour le couple.

La découpe d'une poutre est, dans un mode de réalisation, disposée sensiblement à 45° par rapport à la direction radiale de la poutre en question.

La réalisation de découpe dans au moins une poutre déformable 18a peut permettre, suivant le nombre et la disposition de l'ensemble des poutres notamment,

- soit d'obtenir une protection contre les surcharges, dans les deux sens de rotation possible ;
- soit d'obtenir un couplemètre à plusieurs gammes de mesure de couple, la rigidité du couplemètre augmentant dès lors qu'un grand nombre de poutres est placée sous charge.

L'on se rapporte maintenant à la figure 31 qui est une vue en perspective d'un capteur 9 selon un mode de réalisation.

Ce capteur 9 comporte un corps cylindrique 54 en matériau ferromagnétique et un détecteur magnétique 55 destiné à faire face au générateur de champ magnétique tel qu'un aimant 9'.

Le capteur 9 comporte, à l'opposé du détecteur magnétique 55, une pièce formant butée 56 limitant le mouvement axial du capteur 9 dans les logements 20.

Le détecteur magnétique 55 comporte un élément sensible 57 excentré par rapport à la section circulaire du capteur 9 de sorte que la rotation du capteur 9 autour de l'axe $O_z$ génère un déplacement suivant l'axe $O_x$ de l'élément sensible 57.

Lors de l'assemblage en usine des capteurs 9, l'opérateur termine le montage par la mesure du signal fourni par les deux capteurs 9 à l'aide d'un appareil adapté.

Ce signal est fonction de la position de l'élément sensible 57 vis-à-vis de la transition magnétique, de sorte que l'opérateur peut, en tournant le capteur 9, amener l'élément sensible 57 en regard de la transition magnétique du générateur de champ magnétique et annuler ledit signal. Une fois ce réglage effectué, les capteurs sont immobilisés, par exemple au moyen d'une colle.

Le réglage décrit ci-dessus est désigné par l'expression réglage par excentration.

La puissance du signal fourni par chaque détecteur magnétique 55 peut être également modulée en modifiant la pénétration axiale des capteurs 9 dans les logements 20 de sorte à modifier l'entrefer entre le détecteur 55 et l'aimant 9' lui faisant face.

Dans le mode de réalisation du capteur 9 représenté en figure 31, la valeur minimale de l'entrefer est fixée par la pièce formant butée 56, venant se plaquer contre la face avant des surépaisseurs 33 de l'anneau non déformable 14b.

L'étalonnage du couplemètre peut être obtenu, par exemple, par application d'une charge calibrée et réglage du niveau d'amplification du signal.

Le circuit électronique 8 comporte, dans un mode de réalisation.

- une arrivée de courant pour l'alimentation en énergie des sondes de Hall ;
- un circuit de filtrage du signal provenant des sondes, afin d'éliminer le bruit de fond ;
- un module assurant la conversion analogique numérique du signal ;
- un module de contrôle et de compensation de dérive du signal émis par les sondes en fonction de la température, par exemple dans une gamme -40° +80°C ;
- un module de sécurité testant régulièrement le bon fonctionnement de chacune des sondes.

Le cas échéant, le circuit électronique 8 comporte un module permettant de fixer le seuil de déclenchement de l'assistance de direction, seuil correspondant à une valeur déterminée, ou encore un module de transmission du signal sans fil ou sans contact.

**Revendications**

1. Capteur de couple formé d'un ensemble présentant une certaine rigidité comportant :

   - un premier anneau extérieur déplaçable (14a);
   - un second anneau excérieur, sensiblement non contraint (14b) placé à distance de l'anneau extérieur déplaçable (14a) ;
   - un anneau intérieur (15) solidaire en rotation d'une colonne (2) sur laquelle s'applique le couple à mesurer, l'anneau extérieur déplaçable (14a) étant apte à être solidaire rigidement du moyen appliquant le couple à mesurer sur la colonne, l'anneau extérieur déplaçable (14a) étant assemblé à l'anneau intérieur (15) par au moins un moyen déformable élastiquement (18a, 18b);

   l'anneau extérieur, sensiblement non contraint (14b) étant assemblé à l'anneau intérieur (15) par au moins un moyen (19) sensiblement non contraint, **caractérisé en ce que** des moyens de mesure (9) du petit déplacement relatif de l'anneau extérieur déplaçable (14a) par rapport à l'anneau extérieur sensiblement non contraint (14b) lorsqu'un couple est appliqué sur la colonne (2) par le moyen, sont intégrés à au moins l'un des deux anneaux (14a, 14b), l'anneau déplaçable (14a), l'anneau extérieur sensiblement non contraint (14b) et l'anneau intérieur (15) étant venus de matière avec leurs éléments de liaison (18a, 18b, 19).

2. Capteur de couple selon la revendication 1, **caractérisé en ce que** les moyens de mesure du petit déplacement relatif du premier anneau extérieur déplaçable (14a) par rapport au second anneau extérieur, sensiblement non contraint (14b) sont choisis parmi le groupe comprenant : tes détecteurs optiques, les détecteurs électromagnétiques, les détecteurs capacitifs et équivalents.

3. Capteur de couple selon la revendication 2, **caractérisé en ce que** les moyens de mesure comprennent au moins une sonde à effet Hall (9) disposée dans un logement (20) du second anneau extérieur, sensiblement non contraint (14b).

4. Capteur de couple selon la revendication 2, **caractérisé en ce que** les moyens de mesure comprennent au moins une sonde à magnétorésistance (HR) ou magnétorésistance géante (GMR).

5. Capteur de couple selon l'une quelconque des revendications 1 à 4, **caractérisé en ce que** le moyen déformable élastiquement associant le premier anneau extérieur déplaçable (14a) et l'anneau intérieur (15) est une poutre (18a) s'étendant radialement de l'anneau intérieur (15) vers l'anneau extérieur déplaçable (14a).

6. Capteur de couple selon la revendication 5, **caractérisé en ce qu'**il comporte plusieurs poutres (18a) déformables élastiquement, s'étendant radialement de l'anneau intérieur (15) vers le premier anneau extérieur déplaçable (14a).

7. Capteur de couple selon la revendication 6, **caractérisé en ce que** les poutres (18a) sont équidistantes les unes des autres.

8. Capteur de couple selon la revendication 6, **caractérisé en ce que** les poutres déformables élastiquement (18a) ne sont pas équidistantes les unes des autres.

9. Capteur de couple selon l'une quelconque des revendications 5 à 8, **caractérisé en ce que** la hauteur d'au moins une poutre déformable élastiquement (18a) varie depuis son pied (30) jusqu'à sa tête (31).

10. Capteur de couple selon l'une quelconque des revendications 5 à 9, **caractérisé en ce que** l'épaisseur d'au moins une poutre déformable élastiquement (18a) varie depuis son pied (30) jusqu'à sa tête (31).

11. Capteur de couple selon la revendication 9, **caractérisé en ce que** la hauteur de l'ensemble des poutres déformables élastiquement (18a) varie de manière identique de leur pied (30) jusqu'à leur tête (31), l'épaisseur desdites poutres (18a) étant constante.

12. Capteur de couple selon la revendication 10, **caractérisé en ce que** l'épaisseur de l'ensemble des poutres déformables élastiquement (18a) varie de manière identique de leur pied (30) jusqu'à leur tête (31), la hauteur desdites poutres (18a) étant constante.

13. Capteur de couple selon l'une quelconque des revendications 9 à 12, **caractérisé en ce que** la hauteur des poutres déformables élastiquement (18a) varie de manière linéaire depuis le pied (30) jusqu'à la tête (31) desdites poutres (18a).

14. Capteur de couple selon l'une quelconque des revendications 9 à 12, **caractérisé en ce que** la hauteur des poutres déformables élastiquement (18a) varie de manière polynomiale depuis le pied (30) jusqu'à la tête (31) desdites poutres (18a).

15. Capteur de couple selon l'une quelconque des revendications 10 à 12, **caractérisé en ce que** l'épaisseur des poutres déformables élastiquement (18a) varie de manière linéaire depuis le pied (30) jusqu'à la tête (31) desdites poutres (18a).

16. Capteur de couple selon l'une quelconque des revendications 10 à 12, **caractérisé en ce que** l'épaisseur des poutres déformables élastiquement (18a) varie de manière polynomiale depuis le pied (30) jusqu'à la tête (31) desdites poutres (18a).

17. Capteur de couple selon l'une quelconque des revendications 1 à 16, **caractérisé en ce que** le moyen sensiblement non contraint associant le second anneau extérieur sensiblement non contraint (14b) et l'anneau intérieur (15) est une poutre (19) s'étendant radialement de l'anneau intérieur (15) vers le second anneau extérieur sensiblement non contraint (14b).

18. Capteur de couple selon la revendication 17, **caractérisé en ce qu'**il comporte plusieurs poutres (19) sensiblement libres de contrainte s'étendant radialement de l'anneau intérieur (15) vers le second anneau extérieur non contraint (14b) et les reliant.

19. Capteur de couple selon la revendication 18, **caractérisé en ce que** les poutres (19) sensiblement libres de contrainte sont équidistantes les unes des autres.

20. Capteur de couple selon la revendication 18, **caractérisé en ce que** les poutres (19) sensiblement libres de contrainte ne sont pas équidistantes les unes des autres.

21. Capteur de couple selon la revendication 19 ou 20, **caractérisé en ce que** les poutres sensiblement libres de contraintes (19) sont sensiblement disposées dans les mêmes plans radiaux que les poutres déformables (18a).

22. Capteur de couple selon la revendication 19 ou 20, **caractérisé en ce que** les poutres sensiblement libres de contrainte (19) sont de géométrie sensiblement identique à celles des poutres déformables élastiquement (18a).

23. Capteur de couple selon la revendication 21 ou 22, **caractérisé en ce que** les poutres déformables élastiquement (18a) et les poutres sensiblement libres de contrainte (19) sont chacune au nombre de quatre.

24. Capteur de couple selon l'une quelconque des revendications 1 à 4, **caractérisé en ce que** le moyen déformable élastiquement associant l'anneau extérieur déplaçable (14a) à l'anneau intérieur (15) est un tube déformable en torsion (18b).

**25.** Capteur de couple selon la revendication 24, **caractérisé en ce que** le moyen sensiblement non contraint associant la second anneau extérieur (14b) à l'anneau intérieur (15) est une poutre (19) s'étendant radialement de l'anneau intérieur (15) vers l'anneau extérieur déplaçable (14a).

**26.** Capteur de couple selon la revendication 25, **caractérisé en ce que** deux poutres radiales (19) disposées suivant un diamètre de l'anneau extérieur sensiblement non contraint (14b) le relie à l'anneau intérieur (15).

**27.** Capteur de couple selon l'une quelconque des revendications 1 à 4, **caractérisé en ce que** le moyen déformable élastiquement associant le premier anneau extérieur déplaçable (14a) et l'anneau intérieur (15) est en forme de serpentin comportant au moins un coude (50).

**28.** Capteur de couple selon la revendication 27, **caractérisé en ce qu'**il comporte plusieurs serpentins (18'a) déformables élastiquement s'étendant radialement de l'anneau intérieur (15) vers le premier anneau extérieur déplaçable (14a).

**29.** Dispositif de direction de véhicule, **caractérisé en ce qu'**elle comporte au moins un capteur de couple selon l'une quelconque des revendications 1 à 28.

**30.** Dispositif de direction de véhicule selon la revendication 29, **caractérisé en ce que** le capteur forme moyeu rapporté au volant de direction (5).

**31.** Dispositif de direction de véhicule selon la revendication 29, **caractérisé en ce que** le capteur forme moyeu au volant (5) de direction et est venu de matière avec celui-ci.

**32.** Dispositif de direction de véhicule selon l'une quelconque des revendications 29 à 31, **caractérisé en ce qu'**elle comporte, associée au capteur, un circuit électronique (8) de traitement du signal issu du capteur.

**33.** Dispositif de direction selon la revendication 32, **caractérisé en ce qu'**elle comporte des moyens d'assistance au braquage, le déclenchement desdits moyens étant fonction de la valeur du signal issu du capteur et traité par la circuit électronique (8).

**34.** Dispositif de direction selon la revendication 33, **caractérisé en ce qu'**elle comporte un connecteur tournant (4) permettant de relier électriquement le circuit électronique (8) à un calculateur, ledit circuit électronique (8) étant fixé sur la face avant du capteur et formant partie intégrante de celui-ci.

**Patentansprüche**

**1.** Aus einer eine bestimmte Festigkeit aufweisenden Struktur gebildeter Momentsensor mit:

- einem ersten äußeren verschiebbaren Ring (14a);

- einem zweiten äußeren verschiebbaren, deutlich nicht gespannten, entfernt vom äußeren verschiebbaren Ring (14a) platzierten Ring (14b);

- einem inneren, in Rotation fest mit einer Säule (2) verbundenen Ring (15), auf die das zu messende Moment angewendet wird, wobei der äußere verschiebbare Ring (14a) geeignet ist, steif fest mit dem das zu messende Moment auf die Säule anwendenden Mittel verbunden zu werden, wobei der äußere verschiebbare Ring (14a) mit dem inneren Ring (15) durch wenigstens ein elastisch verformbares Mittel (18a, 18b) zusammengebaut ist;

wobei der äußere, deutlich nicht gespannte Ring (14b) mit dem inneren Ring (15) durch wenigstens ein deutlich nicht gespanntes Mittel (19) zusammengebaut ist, **dadurch gekennzeichnet, dass** die Messmittel (9) der kleinen Verschiebung relativ zum äußeren verschiebbaren Ring (14a) im Verhältnis zum äußeren, deutlich nicht gespannten Ring (14b), wenn ein Moment durch das Mittel auf die Säule (2) angewendet wird, in wenigstens einen der beiden Ringe (14a, 14b) integriert sind, wobei der verschiebbare Ring (14a), der äußere, deutlich nicht gespannte Ring (14b) und der innere Ring (15), aus demselben Material hergestellt sind wie ihre Verbindungselemente (18a, 18b, 19).

**2.** Momentsensor gemäß Anspruch 1, **dadurch gekennzeichnet, dass** die Messmittel der kleinen Verschiebung relativ zum ersten äußeren verschiebbaren Ring (14a) im Verhältnis zum zweiten äußeren, deutlich nicht gespannten Ring (14b) aus der Gruppe ausgewählt sind, umfassend: die optischen Sensoren, die elektromagnetischen Sensoren, die kapazitiven Sensoren und dergleichen.

**3.** Momentsensor gemäß Anspruch 2, **dadurch gekennzeichnet, dass** die Messmittel wenigstens eine in einer Aufnahme (20) des zweiten äußeren, deutlich nicht gespannten Ringes (14b) angeordnete Hallsonde (9) umfassen.

**4.** Momentsensor gemäß Anspruch 2, **dadurch gekennzeichnet, dass** die Messmittel wenigstens eine Magnetoresistenzsonde (HR) oder Riesenmagnetoresistenzsonde (GMR) umfassen.

**5.** Momentsensor gemäß Anspruch 1 bis 4, **dadurch gekennzeichnet, dass** das den ersten äußeren verschiebbaren Balken (14a) und den inneren Ring (15) zuordnende elastisch verformbare Mittel ein sich radial vom inneren Ring (15) zum äußeren verschiebbaren Ring (14a) erstreckender Balken (18a) ist.

**6.** Momentsensor gemäß Anspruch 5, **dadurch gekennzeichnet, dass** er mehrere elastisch verformbare, sich radial vom inneren Ring (15) zum ersten äußeren verschiebbaren Ring (14a) erstreckende Balken (18a) umfasst.

**7.** Momentsensor gemäß Anspruch 6, **dadurch gekennzeichnet, dass** die Balken (18a) voneinander in derselben Entfernung beabstandet sind.

**8.** Momentsensor gemäß Anspruch 6, **dadurch gekennzeichnet, dass** die elastisch verformbaren Balken (18a) voneinander nicht in derselben Entfernung beabstandet sind.

**9.** Momentsensor gemäß Anspruch 5 bis 8, **dadurch gekennzeichnet, dass** die Höhe von wenigstens einem elastisch verformbaren Balken (18a) von seinem Fußende (30) bis zu seinem Kopfende (31) variiert.

**10.** Momentsensor gemäß Anspruch 5 bis 9, **dadurch gekennzeichnet, dass** die Dicke von wenigstens einem elastisch verformbaren Balken (18a) von seinem Fußende (30) bis zu seinem Kopfende (31) variiert.

**11.** Momentsensor gemäß Anspruch 9, **dadurch gekennzeichnet, dass** die Höhe der Struktur der elastisch verformbaren Balken (18a) auf identische Weise von ihrem Fußende (30) bis zu ihrem Kopfende (31) variiert, wobei die Dicke der genannten Balken (18a) konstant ist.

**12.** Momentsensor gemäß Anspruch 10, **dadurch gekennzeichnet, dass** die Dicke der Struktur der elastisch verformbaren Balken (18a) auf identische Weise von ihrem Fußende (30) bis zu ihrem Kopfende (31) variiert, wobei die Höhe der genannten Balken (18a) konstant ist.

**13.** Momentsensor gemäß Anspruch 9 bis 12, **dadurch gekennzeichnet, dass** die Höhe der elastisch verformbaren Balken (18a) auf lineare Weise vom Fußende (30) bis zum Kopfende (31) der genannten Balken (18a) variiert.

**14.** Momentsensor gemäß Anspruch 9 bis 12, **dadurch gekennzeichnet, dass** die Höhe der elastisch verformbaren Balken (18a) auf polynomische Weise vom Fußende (30) bis zum Kopfende (31) der genannten Balken (18a) variiert.

**15.** Momentsensor gemäß Anspruch 10 bis 12, **dadurch gekennzeichnet, dass** die Dicke der elastisch verformbaren Balken (18a) auf lineare Weise vom Fußende (30) bis zum Kopfende (31) der genannten Balken (18a) variiert.

**16.** Momentsensor gemäß Anspruch 10 bis 12, **dadurch gekennzeichnet, dass** die Dicke der elastisch verformbaren Balken (18a) auf polynomische Weise vom Fußende (30) bis zum Kopfende (31) der genannten Balken (18a) variiert.

**17.** Momentsensor gemäß Anspruch 1 bis 16, **dadurch gekennzeichnet, dass** das den zweiten äußeren, deutlich nicht gespannten Ring (14b) und den inneren Ring (15) zuordnende deutlich nicht gespannte Mittel ein sich radial vom inneren Ring (15) zum zweiten äußeren, deutlich nicht gespannten Ring (14b) erstreckender Balken (19) ist.

**18.** Momentsensor gemäß Anspruch 17, **dadurch gekennzeichnet, dass** er mehrere, deutlich von Spannungen freie, sich radial vom inneren Ring (15) zum zweiten äußeren, nicht gespannten Ring (14b) erstreckende und diese verbindende Balken (19) umfasst.

**19.** Momentsensor gemäß Anspruch 18, **dadurch gekennzeichnet, dass** die deutlich von Spannungen freien Balken (19) voneinander in derselben Entfernung beabstandet sind.

**20.** Momentsensor gemäß Anspruch 18, **dadurch gekennzeichnet, dass** die deutlich von Spannungen freien Balken (19) voneinander nicht in derselben Entfernung beabstandet sind.

**21.** Momentsensor gemäß Anspruch 19 oder 20, **dadurch gekennzeichnet, dass** die deutlich von Spannungen freien Balken (19) deutlich in denselben radialen Ebenen angeordnet sind wie die verformbaren Balken (18a).

**22.** Momentsensor gemäß Anspruch 19 oder 20, **dadurch gekennzeichnet, dass** die deutlich von Spannungen freien Balken (19) eine deutlich identische Geometrie aufweisen wie die der elastisch verformbaren Balken (18a).

**23.** Momentsensor gemäß Anspruch 21 bis 22, **da-**

**durch gekennzeichnet, dass** die elastisch verformbaren Balken (18a) und die deutlich von Spannungen freien Balken (19) jeweils vier Stück sind.

24. Momentsensor gemäß Anspruch 1 bis 4, **dadurch gekennzeichnet, dass** das den äußeren verschiebbaren Ring (14a) dem inneren Ring (15) zuordnende elastisch verformbare Mittel ein in Verdrehung verformbares Rohr (18b) ist.

25. Momentsensor gemäß Anspruch 24, **dadurch gekennzeichnet, dass** das den zweiten äußeren Ring (14b) dem inneren Ring (15) zuordnende deutlich nicht gespannte Mittel ein sich radial vom inneren Ring (15) zum äußeren verschiebbaren Ring (14a) erstreckender Balken (19) ist.

26. Momentsensor gemäß Anspruch 25, **dadurch gekennzeichnet, dass** zwei radiale, gemäß einem Durchmesser des äußeren, deutlich nicht gespannten Rings (14b) angeordnete Balken (19) ihn mit dem inneren Ring (15) verbinden.

27. Momentsensor gemäß Anspruch 1 bis 4, **dadurch gekennzeichnet, dass** das den ersten äußeren verschiebbaren Ring (14a) und den inneren Ring (15) zuordnende elastisch verformbare Mittel die Form einer wenigstens einen Krümmer (50) umfassenden Rohrschlange aufweist.

28. Momentsensor gemäß Anspruch 27, **dadurch gekennzeichnet, dass** er mehrere elastisch verformbare, sich radial vom inneren Ring (15) zum ersten äußeren verschiebbaren Ring (14a) erstreckende Rohrschlangen (18'a) umfasst.

29. Fahrzeuglenkvorrichtung, **dadurch gekennzeichnet, dass** sie wenigstens einen Momentsensor gemäß Anspruch 1 bis 28 umfasst.

30. Fahrzeuglenkvorrichtung gemäß Anspruch 29, **dadurch gekennzeichnet, dass** der Sensor eine auf das Lenkrad (5) aufgesetzte Anlagefläche bildet.

31. Fahrzeuglenkvorrichtung gemäß Anspruch 29, **dadurch gekennzeichnet, dass** der Sensor eine Anlagefläche zum Lenkrad (5) bildet und aus demselben Material wie dieses hergestellt ist.

32. Fahrzeuglenkvorrichtung gemäß Anspruch 29 bis 31, **dadurch gekennzeichnet, dass** sie, zugeordnet zum Sensor, einen elektronischen Schaltkreis (8) zur Verarbeitung des aus dem Sensor stammenden Signals umfasst.

33. Fahrzeuglenkvorrichtung gemäß Anspruch 32, **dadurch gekennzeichnet, dass** sie Hilfsmittel zum Einschlagen umfasst, wobei das Auslösen der genannten Mittel in Abhängigkeit des Wertes des aus dem Sensor stammenden Signals erfolgt und durch den elektronischen Schaltkreis (8) verarbeitet wird.

34. Fahrzeuglenkvorrichtung gemäß Anspruch 33, **dadurch gekennzeichnet, dass** sie ein die elektrische Verbindung des elektronischen Schaltkreises (8) mit einem Rechner zulassendes sich drehendes Verbindungsstück (4) umfasst, wobei der genannte elektronische Schaltkreis (8) auf der vorderen Seite des Sensors befestigt ist und fester Bestandteil desselben ist.

**Claims**

1. A torque sensor formed by an assembly having a certain degree of rigidity, including:

   - a first movable external ring (14a);

   - a second substantially unstressed external ring (14b) placed at a distance from the movable external ring (14a);

   - an internal ring (15) fixed with respect to rotation to a column (2) to which the torque to be measured is applied, the movable external ring (14a) being able to be rigidly fixed to the hub applying the torque to be measured to the column, the movable external ring (14a) being connected to the internal ring (15) by at least one elastically deformable means (18a, 18b);

   the substantially unstressed external ring (14b) being connected to the internal ring (15) by at least one substantially unstressed means (19), **characterised in that** the means (9) of measuring the relative small movements of the movable external ring (14a) with respect to the substantially unstressed external ring (14b) when a torque is applied to the column (2) by the means, are integrated into at least one of the two rings (14a, 14b), the movable ring (14a), the substantially unstressed external ring (14b) and the internal ring being made in one piece with their connecting elements (18a, 18b, 19).

2. A torque sensor according to Claim 1, **characterised in that** the means of measuring the small relative movement of the first movable external ring (14a) with respect to the second substantially unstressed external ring (14b) are chosen from amongst the group comprising optical detectors, electromagnetic detectors, capacitive detectors and equivalent.

3. A torque sensor according to claim 2, **character-**

**ised in that** the measuring means comprise at least one Hall effect sensor (9) disposed in a housing (20) in the second substantially unstressed external ring (14b).

4. A torque sensor according to claim 2, **characterised in that** the measuring means comprise at least one magnetoresistance (MR) or giant magnetoresistance (GMR) sensor.

5. A torque sensor according to any one of claims 1 to 4, **characterised in that** the elastically deformable means connecting the first movable external ring (14a) and the internal ring (15) is a beam (18a) extending radially from the internal ring (15) to the movable external ring (14a).

6. A torque sensor according to claim 5, **characterised in that** it includes several elastically deformable beams (18a), extending radially from the internal ring (15) to the first movable external ring (14a).

7. A torque sensor according to Claim 6, **characterised in that** the beams (18a) are equidistant from each other.

8. A torque sensor according to claim 6, **characterised in that** the elastically deformable beams (18a) are not equidistant from each other.

9. A torque sensor according to any one of claims 5 to 8, **characterised in that** the height of at least one elastically deformable beam (18a) varies from its foot (30) to its head (31).

10. A torque sensor according to any one of claims 5 to 9, **characterised in that** the thickness of at least one elastically deformable beam (18a) varies from its foot (30) to its head (31).

11. A torque sensor according to claim 9, **characterised in that** the height of all the elastically deformable beams (18a) varies identically from their foot (30) to their head (31), the thickness of the said beams (18a) being constant.

12. A torque sensor according to claim 10, **characterised in that** the thickness of all the elastically deformable beams (18a) varies identically from their foot (30) to their head (31), the height of the said beams (18a) being constant.

13. A torque sensor according to any one of claims 9 to 12, **characterised in that** the height of the elastically deformable beams (18a) varies in a linear fashion from the foot (30) to the head (31) of the said beams (18a).

14. A torque sensor according to any one of claims 9 to 12, **characterised in that** the height of the elastically deformable beams (18a) varies in a polynomial fashion from the foot (30) to the head (31) of the said beams (18a).

15. A torque sensor according to any one of claims 10 to 12, **characterised in that** the thickness of the elastically deformable beams (18a) varies in a linear fashion from the foot (30) to the head (31) of the said beams (18a).

16. A torque sensor according to any one of claims 10 to 12, **characterised in that** the thickness of the elastically deformable beams (18a) varies in a polynomial fashion from the foot (30) to the head (31) of the said beams (18a).

17. A torque sensor according to any one of claims 1 to 16, **characterised in that** the substantially unstressed means connecting the second substantially unstressed external ring (14b) and the internal ring (15) is a beam (19) extending radially from the internal ring (15) to the second substantially unstressed external ring (14b).

18. A torque sensor according to claim 17, **characterised in that** it includes several beams (19) substantially free of stress extending radially from the internal ring (15) to the second unstressed external ring (14b) and connecting them.

19. A torque sensor according to claim 18, **characterised in that** the beams (19) substantially free of stress are equidistant from each other.

20. A torque sensor according to claim 18, **characterised in that** the beams (19) substantially free of stress are not equidistant from each other.

21. A torque sensor according to claim 19 or 20, **characterised in that** the beams substantially free of stresses (19) are substantially disposed in the same radial planes as the deformable beams (18a).

22. A torque sensor according to Claim 19 or 20, **characterised in that** the beams substantially free of stress (19) have a geometry substantially identical to that of the elastically deformable beams (18a).

23. A torque sensor according to claim 21 or 22, **characterised in that** the elastically deformable beams (18a) and the beams substantially free of stress (19) are each four in number.

24. A torque sensor according to any one of claims 1 to 4, **characterised in that** the elastically deformable means connecting the movable external ring (14a) and the internal ring (15) is a tube (18b) deformable under torsion.

**25.** A torque sensor according to claim 24, **characterised in that** the substantially unstressed means connecting the second external ring (14b) to the internal ring (15) is a beam (19) extending radially from the internal ring (15) to the movable external ring (14a).

**26.** A torque sensor according to claim 25, **characterised in that** two radial beams (19) disposed on a diameter of the substantially unstressed external ring (14b) connect it to the internal ring (15).

**27.** A torque sensor according to any one of claims 1 to 4, **characterised in that** the elastically deformable means connecting the first movable external ring (14a) and the internal ring (15) is in the form of a coil including at least one bend (50).

**28.** A torque sensor according to claim 27, **characterised in that** it includes several elastically deformable coils (18'a) extending radially from the internal ring (15) to the first movable external ring (14a).

**29.** A vehicle steering device, **characterised in that** it has at least one torque sensor according to any one of claims 1 to 28.

**30.** A vehicle steering device according to claim 29, **characterised in that** the sensor forms a hub attached to the steering wheel (5).

**31.** A vehicle steering device according to claim 29, **characterised in that** the sensor forms a hub on the steering wheel (5) and is made in one piece with it.

**32.** A vehicle steering device according to any one of claims 29 to 31, **characterised in that** it has, associated with the sensor, an electronic circuit (8) for processing the signal issuing from the sensor.

**33.** A steering device according to claim 32, **characterised in that** it has steering power assistance means, the triggering of the said means being a function of the value of the signal issuing from the sensor and processed by the electronic circuit (8).

**34.** A steering device according to claim 33, **characterised in that** it has a rotating connector (4) for electrically connecting the electronic circuit (8) to a computer, the said electronic circuit (8) being fixed to the front face of the sensor and forming an integral part thereof.

FIG.1

FIG.2

FIG.3

**FIG.4**

FIG.5

EP 1 053 456 B1

**FIG.6**

EP 1 053 456 B1

FIG.7a

**FIG.7b**

FIG.8a

13

5

14b

14a

D

12c

12a

12c

FIG.8b

FIG.9

FIG.10

EP 1 053 456 B1

FIG.11

FIG.12

FIG.13

EP 1 053 456 B1

FIG.14    FIG.15

30

FIG.16

FIG.17

FIG.18

FIG.19

FIG.20

FIG.21

FIG.22

FIG. 27

EP 1 053 456 B1

FIG.23

FIG.24

EP 1 053 456 B1

FIG.25

FIG.26

**FIG.28**

FIG.29

EP 1 053 456 B1

FIG.30

FIG.31